# EUROPEAN PATENT SPECIFICATION

(11) **EP 3 274 411 B1**
(45) Date of publication and mention of the grant of the patent: **07.06.2023**
(21) Application number: 16718743.4
(22) Date of filing: 24.03.2016
(51) Int. Cl.: C09D 125/08, C09D 133/14, C09D 143/04

(54) **DURABLE ANTI-FINGERPRINT POLYMERS AND COATING COMPOSITIONS**
DAUERHAFTE ANTI-FINGERABDRUCK-POLYMERE UND BESCHICHTUNGSZUSAMMENSETZUNGEN
POLYMÈRES ET COMPOSITIONS DE REVÊTEMENT ANTI-TRACES DE DOIGT DURABLES

(30) Priority: 27.03.2015 US 201562139017 P; 17.12.2015 US 201562268541 P
(43) Date of publication of application: 31.01.2018
(73) Proprietor: PPG Industries Ohio, Inc., Cleveland, OH 44111 (US)
(72) Inventor: OLSON, Kurt, G., Gibsonia, PA 15044 (US); GAO, Renlong, Avon, OH 44011 (US); BARANCYK, Steven, V., Wexford, PA 15090 (US); BALLIET, Courtney, Pittsburgh, PA 15238 (US); BOWLES, Steven, E., Pittsburgh, PA 15215 (US); SAHA, Gobinda, Pittsburgh, PA 15239 (US); SCHWENDEMAN, Irina, G., Wexford, PA 15090 (US)
(74) Representative: f & e patent
(86) International application number: PCT/US2016/023912
(87) International publication number: WO 2016/160483

(56) References cited:
- EP-A1- 2 269 817
- WO-A1-2010/131048
- GB-A- 1 441 367
- US-A1- 2014 030 652

## Description

### FIELD OF THE INVENTION

The present invention relates to lipophilic/hydrophilic polymers and anti-fingerprint coating compositions containing the same as well as substrates at least partially coated with coatings deposited from the anti-fingerprint coating compositions.

### BACKGROUND OF THE INVENTION

Consumer electronic devices such as cellular phones, notebook monitors, television screens, and the like are readily marked with fingerprints when handled. For instance, the glass surface of a cellular phone, which is contacted with the hands and fingers, becomes readily marked with oils. To prevent marks and smudges, a fingerprint resistant coating is often applied to the surface of consumer electronic devices. In addition to fingerprint resistant properties, these coatings should also exhibit good adhesive and anti-friction properties. However, current anti-fingerprint coatings do not effectively mask or prevent fingerprint marks and smudges on the surface of substrates. As such, it is desirable to provide improved anti-fingerprint coatings that more effectively mask or prevent fingerprint marks and smudges on the surface of substrates such as the surface of consumer electronic devices.
US 2014/030652 A1 is directed to an undercoat agent usable in phase separation of a layer formed on a substrate to form a pattern, wherein the undercoat comprises a resin component having structural units derived from an aromatic monomer, including copolymers with propyltrimethoxysilane methacrylate.
WO 2010/131048 A1 concerns temperature-responsive co-polymers such as poly(N-isopropylacrylamide-co-hydroxypropyl methacrylate-co-3-trimethoxysilylpropyl methacrylate).
EP 2 269 817 A1 relates to a hydrophilic member and a fin stock, particular an aluminum-made fin stock for heat exchangers having sufficient hydrophilicity and excellent water resistance, anti-fouling properties and scratch resistance. The hydrophilic member comprises a base material having thereon a hydrophilic film formed from a hydrophilic composition containing a hydrophilic polymer having at least one hydrolyzable alkoxysilyl group on a polymer side chain.
GB 1 441 367 A refers to a moulding composition comprising an aromatic polycarbonate, quartz mineral, and a vinyl polymer containing both epoxy groups and either acyloxysilane groups or alkoxysilane groups.
JP H05 25354 A is concerned with a reactive resin emulsion and coating agent having a hydrolyzable silyl group.

### SUMMARY OF THE INVENTION

The present invention is directed to a lipophilic/hydrophilic polymer prepared from a mixture of reactants in a non-aqueous liquid medium comprising less than 50 weight % water, based on the total weight of the liquid medium, the reactants comprising:
a) a polymerizable ethylenically unsaturated alkoxysilane;
b) a polymerizable ethylenically unsaturated hydrophilic monomer that is different from (a) and comprises:
   (i-1) a polymerizable ethylenically unsaturated group selected from a (meth)acrylol group, a vinyl group or combinations thereof and
   (i-2a) a polar group, such as -CN or -NH₂, but no hydrocarbon group, or
   (i-2b) one or more C₁-C₂ alkyl groups having a total number of carbon atoms of no more than two, wherein the C₁-C₂ alkyl group is unsubstituted or can optionally be substituted with a hydrophilic functional group, provided that no hydrocarbon group with more than two carbon atoms is present, or
   (i-2c) one or more linear, branched or cyclic hydrocarbyl groups having a total number of at least three carbon atoms and being substituted with one or more hydrophilic functional groups comprising a hydroxyl and/or an amino group, provided that the equivalent ratio of carbon atoms in the hydrocarbon group(s) to hydrophilic functional groups is equal to or less than 4:1, or
   (ii) a polymerizable ethylenically unsaturated group, two or more ether linkages, a C₂-C₃ hydrocarbon chain positioned between the oxygen atoms of each ether linkage, and optionally hydrophilic functional groups, or
   (iii) a (meth)acrylate monomer comprising one ether linkage such as 2-methoxyethyl acrylate, 2-ethoxyethyl acrylate, and combinations thereof; and
c) a polymerizable ethylenically unsaturated lipophilic monomer that is different from (a) and comprises
   (i) a polymerizable ethylenically unsaturated group selected from a (meth)acrylol group, a vinyl group or combinations thereof and
   (ii) one or more linear, branched or cyclic hydrocarbyl groups having a total number of at least three carbon atoms wherein the hydrocarbyl group is unsubstituted or can optionally be substituted with a hydrophilic functional group provided that the equivalent ratio of carbon atoms in the hydrocarbyl groups to hydrophilic functional groups is greater than 4: 1,
wherein the lipophilic/hydrophilic polymer comprises at least a pendant and/or terminal alkoxysilane group and wherein the mixture of reactants comprises:
from 15 to 50 weight % of the polymerizable ethylenically unsaturated alkoxysilane (a), from 20 to 75 weight of the polymerizable ethylenically unsaturated hydrophilic monomer (b), and from 10 to 60 weight % of the polymerizable ethylenically unsaturated lipophilic monomer (c), based on the total weight of the reactants,
with the proviso that the lipophilic/hydrophilic polymer is not a polymer having a Mw of 40,000 (the polystyrene equivalent value determined by gel permeation chromatography) and being prepared from a mixture of 45 mol % of styrene, 45 mol % of methyl methacrylate, and 10 mol % of propyltrimethoxysilane methacrylate.

The present invention is also directed to an anti-fingerprint coating composition comprising a lipophilic/hydrophilic polymer prepared from a mixture of reactants in a non-aqueous liquid medium comprising less than 50 weight % water, based on the total weight of the liquid medium, the reactants comprising:
a) a polymerizable ethylenically unsaturated alkoxysilane;
b) a polymerizable ethylenically unsaturated hydrophilic monomer that is different from (a); and comprises:
   (i-1) a polymerizable ethylenically unsaturated group selected from a (meth)acrylol group, a vinyl group or combinations thereof and
   (i-2a) a polar group, such as -CN or -NH₂, but no hydrocarbon group, or
   (i-2b) one or more C₁-C₂ alkyl groups having a total number of carbon atoms of no more than two, wherein the C₁-C₂ alkyl group is unsubstituted or can optionally be substituted with a hydrophilic functional group, provided that no hydrocarbon group with more than two carbon atoms is present, or
   (i-2c) one or more linear, branched or cyclic hydrocarbyl groups having a total number of at least three carbon atoms and being substituted with one or more hydrophilic functional groups comprising a hydroxyl and/or an amino group, provided that the equivalent ratio of carbon atoms in the hydrocarbon group(s) to hydrophilic functional groups is equal to or less than 4:1, or
   (ii) a polymerizable ethylenically unsaturated group, two or more ether linkages, a C₂-C₃ hydrocarbon chain positioned between the oxygen atoms of each ether linkage, and optionally hydrophilic functional groups, or
   (iii) a (meth)acrylate monomer comprising one ether linkage such as 2-methoxyethyl acrylate, 2-ethoxyethyl acrylate, and combinations thereof; and
c) a polymerizable ethylenically unsaturated lipophilic monomer that is different from (a) and comprises
   (i) a polymerizable ethylenically unsaturated group selected from a (meth)acrylol group, a vinyl group or combinations thereof and
   (ii) one or more linear, branched or cyclic hydrocarbyl groups having a total number of at least three carbon atoms wherein the hydrocarbyl group is unsubstituted or can optionally be substituted with a hydrophilic functional group provided that the equivalent ratio of carbon atoms in the hydrocarbyl groups to hydrophilic functional groups is greater than 4: 1,
wherein the lipophilic/hydrophilic polymer comprises at least a pendant and/or terminal alkoxysilane group and wherein the mixture of reactants comprises:
from 15 to 50 weight % of the polymerizable ethylenically unsaturated alkoxysilane (a), from 20 to 75 weight of the polymerizable ethylenically unsaturated hydrophilic monomer (b), and from 10 to 60 weight % of the polymerizable ethylenically unsaturated lipophilic monomer (c), based on the total weight of the reactants.

The present invention also includes substrates at least partially coated with the anti-fingerprint coating compositions described herein.

### DESCRIPTION OF THE INVENTION

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In this application, the use of the singular includes the plural and plural encompasses singular, unless specifically stated otherwise. In addition, in this application, the use of "or" means "and/or" unless specifically stated otherwise, even though "and/or" may be explicitly used in certain instances. Further, in this application, the use of "a" or "an" means "at least one" unless specifically stated otherwise. For example, "a" polymerizable ethylenically unsaturated alkoxysilane, "a" polymerizable ethylenically unsaturated hydrophilic monomer, "a" polymerizable ethylenically unsaturated lipophilic monomer, and the like refer to one or more of any of these items.

As used herein, the term "non-aqueous" refers to a liquid medium comprising less than 50 weight % water, based on the total weight of the liquid medium. In accordance with the present invention, such non-aqueous liquid mediums can comprise less than 40 weight % water, or less than 30 weight % water, or less than 20 weight % water, or less than 10 weight % water, or less than 5% water, based on the total weight of the liquid medium. The solvents that make up 50 weight % or more of the liquid medium include organic solvents. Non-limiting examples of suitable organic solvents include polar organic solvents e.g. protic organic solvents such as glycols, glycol ether alcohols, alcohols; and ketones, glycol diethers, esters, and diesters. Other non-limiting examples of organic solvents include aromatic and aliphatic hydrocarbons.

Further, the term "polymer" refers to oligomers and homopolymers (e.g., prepared from a single monomer species), copolymers (e.g., prepared from at least two monomer species), polymers prepared with more than two, such as three or more, monomer species, and graft polymers. The term "resin" is used interchangeably with "polymer."

In addition, the term "lipophilic/hydrophilic polymer" refers to a polymer having both hydrophilic and lipophilic properties. As used herein, the term "lipophilic" refers to constituent monomers with an affinity for fats, oils, lipids, and non-polar solvents. The term "hydrophilic" refers to constituent monomers with an affinity for water and aqueous solutions (solutions with more than 50 weight % water, based on the total weight of the solution).

As used herein, "(meth)acrylate" and like terms refers both to the acrylate and the corresponding methacrylate. The term "(meth)acryloyl" and like terms refers both to the acryloyl and the corresponding methacryloyl. Also, "(meth)acrylamide" and like terms refers both to the acrylamide and the corresponding methacrylamide. Herein, the term "silane" refers to a compound derived from SiH₄ by substituting organic groups for at least some of the hydrogen atoms, and the term "alkoxy" refers to an -O-alkyl group. Further, an "alkoxysilane" refers to a silane compound with at least one alkoxy group bonded to a silicon atom.

As used herein, a "hydrocarbon" refers to a group formed from hydrogen and carbon atoms. The hydrocarbon can include a linear, branched, and/or cyclic hydrocarbon group.

The term "alkyl" as used herein refers to a linear, branched, and/or cyclic monovalent hydrocarbon radical. The alkyl group may include, but is not limited to, a linear or branched C₁-C₃₀ monovalent hydrocarbon radical, or a linear or branched C₁-C₂₀ monovalent hydrocarbon radical, or a linear or branched C₁-C₁₀ monovalent hydrocarbon radical. The alkyl group may also include, but is not limited to, a cyclic C₃-C₁₉ monovalent hydrocarbon radical, or a cyclic C₃-C₁₂ monovalent hydrocarbon radical, or a cyclic C₅-C₇ monovalent hydrocarbon radical.

Further, the term "alkylene" refers to a linear, branched, and/or cyclic divalent hydrocarbon radical. The alkylene group may include, but is not limited to, a linear or branched C₁-C₃₀ divalent hydrocarbon radical, or linear or branched C₁-C₂₀ divalent hydrocarbon radical, or linear or branched C₁-C₁₀ divalent hydrocarbon radical. The alkylene group may also include, but is not limited to, a cyclic C₃-C₁₉ divalent hydrocarbon radical, or a cyclic C₃-C₁₂ divalent hydrocarbon radical, or a cyclic C₅-C₇ divalent hydrocarbon radical.

As used herein, recitations of "linear, branched, or cyclic" groups, such as linear, branched, or cyclic alkyl or alkylene, are herein understood to include: a divalent methylene group or a monovalent methyl group; groups that are linear, such as linear C₂-C₃₀ alkyl or alkylene groups; groups that are appropriately branched, such as branched C₃-C₃₀ alkyl or alkylene groups; and groups that are cyclic, such as cyclic C₃-C₁₉ alkyl or alkylene groups. The cyclic groups also encompass bridged ring polycycloalkyl groups (or bridged ring polycyclic groups) and fused ring polycycloalkyl groups (or fused ring polycyclic groups).

The alkyl and alkylene groups, as well as any of the other groups described herein, can also include substituted groups thereof. As used herein, "substituted" and "substituted group" means a group, such as an alkyl group or alkylene group for example, in which at least one hydrogen thereof has been optionally replaced or substituted with a group that is other than hydrogen, such as, but not limited to, halo groups (e.g., F, Cl, I, and Br), hydroxyl groups, ether groups, thiol groups, thio ether groups, carboxylic acid groups, carboxylic acid ester groups, phosphoric acid groups, phosphoric acid ester groups, sulfonic acid groups, sulfonic acid ester groups, nitro groups, cyano groups, hydrocarbyl groups, and amine groups.

In addition, as used herein, "ethylenically unsaturated" refers to a group having at least one carbon-carbon double bond. The term "polymerizable ethylenically unsaturated" refers to an ethylenically unsaturated group that participates in chemical reactions.

The lipophilic/hydrophilic polymer of the present invention is prepared from a mixture of reactants, which upon polymerization, results in a polymer having both hydrophilic and lipophilic properties. This combination of properties is provided at least in part from hydrophilic monomeric reactants and lipophilic monomeric reactants. In particular, and which is explained in further detail herein, the lipophilic/hydrophilic polymer of the present invention is prepared from a mixture of reactants comprising: (a) a polymerizable ethylenically unsaturated alkoxysilane; (b) a polymerizable ethylenically unsaturated hydrophilic monomer; and (c) a polymerizable ethylenically unsaturated lipophilic monomer. Other optional reactants can also be used such as, for example, (d) a polymerizable ethylenically unsaturated ionic monomer.

The resulting lipophilic/hydrophilic polymer comprises a pendant and/or terminal alkoxysilane group, a pendant and/or terminal group that provides hydrophilic properties, and a pendant and/or terminal group that provides lipophilic properties. It is appreciated that the pendant and/or terminal alkoxysilane group, hydrophilic group, and lipophilic group are formed from the corresponding polymerizable ethylenically unsaturated alkoxysilane, polymerizable ethylenically unsaturated hydrophilic monomer, and polymerizable ethylenically unsaturated lipophilic monomer. The resulting lipophilic/hydrophilic polymer can comprise other pendant and/or terminal groups or chains such as, for example, an ionic pendant and/or terminal group formed from the corresponding polymerizable ethylenically unsaturated ionic monomer.

Each of the hydrophilic monomers and lipophilic monomers may or may not comprise hydrophilic functional groups, depending at least in part on the size and structure of the hydrophilic monomers and lipophilic monomers. It should be appreciated that the hydrophilic and lipophilic monomers are selected such that the monomers provide respective hydrophilic and lipophilic properties to the lipophilic/hydrophilic polymer.

### (a) Polymerizable Ethylenically Unsaturated Alkoxysilane

As indicated above, the lipophilic/hydrophilic polymer of the present invention can be prepared from a mixture of reactants that includes a polymerizable ethylenically unsaturated alkoxysilane. As used herein, a "polymerizable ethylenically unsaturated alkoxysilane" refers to a compound with an ethylenically unsaturated group, at least one silicon atom, and at least one alkoxy group bonded to the silicon atom. Optionally, other groups can be bonded to the silicon atom including, but not limited to, hydrogen or alkyl groups such as a C₁ to C₃ alkyl group. Non-limiting examples of polymerizable ethylenically unsaturated groups include vinyl groups, (meth)acryloyl groups such as (meth)acrylate groups, and combinations thereof. The polymerizable ethylenically unsaturated alkoxysilane can include a polymerizable mono-ethylenically unsaturated alkoxysilane, or, alternatively, a polymerizable multi-ethylenically unsaturated alkoxysilane.

Further, the alkoxysilane may comprise multiple alkoxy groups bonded to a silicon atom. For example, the alkoxysilane can comprise two alkoxy groups or three alkoxy groups bonded to a silicon atom. As such, the polymerizable ethylenically unsaturated alkoxysilane can have one, two, or three alkoxy groups, and at least one polymerizable ethylenically unsaturated group. The alkoxy groups that can be bonded to the silicon atom include, but are not limited to, alkoxy groups with a C₁ to C₂₀ alkyl chain, a C₁ to C₁₀ alkyl chain, a C₁ to C₆ alkyl chain, or a C₁ to C₄ alkyl chain. For instance, non-limiting examples of alkoxy groups include methoxy, ethoxy, propoxy, isopropoxy, butoxy, sec-butoxy, isobutoxy, t-butoxy, pentoxy, isopentoxy, and combinations thereof.

The polymerizable ethylenically unsaturated alkoxysilane used to prepare the lipophilic/hydrophilic polymer may be represented by Chemical Formula (I):

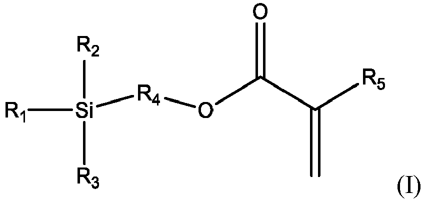

With respect to Chemical Formula (I), R₁, R₂, and R₃ can be an alkoxy group. R₄ can be an alkylene, such as a C₁ to C₂₀ alkylene, a C₁ to C₁₀ alkylene, a C₁ to C₆ alkylene, or a C₁ to C₄ alkylene such as propylene. R₅ can be a methyl group or hydrogen.

Non-limiting examples of suitable polymerizable ethylenically unsaturated alkoxysilanes include γ-(meth)acryloxypropyltrimethoxysilane, γ-(meth)acryloxypropyltriethoxysilane, γ-(meth)acryloxypropyltributoxysilane, γ-(meth)acryloxypropyltripropoxysilane, and combinations thereof.

The polymerizable ethylenically unsaturated alkoxysilane used to prepare the lipophilic/hydrophilic polymer comprises at least 15 weight %, based on the total weight of the reactants. The polymerizable ethylenically unsaturated alkoxysilane used to prepare the lipophilic/hydrophilic polymer comprises up to 50 weight %, such as up to 40 weight %, or up to 30 weight %, based on the total weight of the reactants.

### (b) Polymerizable Ethylenically Unsaturated Hydrophilic Monomer

In accordance with the present invention, the mixture of reactants used to prepare the lipophilic/hydrophilic polymer further includes a polymerizable ethylenically unsaturated hydrophilic monomer that is different from (a) the polymerizable ethylenically unsaturated alkoxysilane. As used herein, a "polymerizable ethylenically unsaturated hydrophilic monomer" refers to a polymerizable ethylenically unsaturated monomer with an affinity for water and aqueous solutions (solutions with more than 50 weight % water, based on the total weight of the solution). The polymerizable ethylenically unsaturated hydrophilic monomer can include a polymerizable mono-ethylenically unsaturated hydrophilic monomer, or, alternatively, a polymerizable multi-ethylenically unsaturated hydrophilic monomer.

The polymerizable ethylenically unsaturated hydrophilic monomer can include, but is not limited to, a monomer comprising: (i) a linear, branched, and/or cyclic hydrocarbon (substituted or non-substituted) such as a C₁-C₃ hydrocarbon; (ii) a polymerizable ethylenically unsaturated group (non-limiting examples including vinyl groups, (meth)acryloyl groups such as (meth)acrylate or (meth)acrylamide groups, and combinations thereof); and (iii) a hydrophilic functional group (non-limiting examples including a hydroxyl group, an amino group such as, for example, primary amino groups, secondary or tertiary amino groups substituted with three or fewer carbon atoms, carboxylic acids, salts of carboxylic acids, and combinations thereof). It should be appreciated that the polymerizable ethylenically unsaturated hydrophilic monomer may include a longer/larger hydrocarbon chain or ring (e.g., at least four carbons) with multiple hydrophilic functional groups such that an equivalent ratio of carbon atoms to hydrophilic functional groups on the hydrocarbon chain or ring is equal to or less than 4:1. For example, the polymerizable ethylenically unsaturated hydrophilic monomer can comprise an equivalent ratio of carbon atoms to hydrophilic functional groups on the hydrocarbon chain or ring of 1:1, 2:1, 3:1, or 4:1. Alternatively, the polymerizable ethylenically unsaturated hydrophilic monomer can include, but is not limited to, a monomer that does not include a hydrophilic functional group and which comprises a C₁-C₂ hydrocarbon chain and a polymerizable ethylenically unsaturated group.

The polymerizable ethylenically unsaturated hydrophilic monomer can also include, but is not limited to, a monomer comprising: (i) a polymerizable ethylenically unsaturated group; and (ii) a polar group directly bonded to the polymerizable ethylenically unsaturated group such as directly to a vinyl group or to the carbonyl of a (meth)acryloyl group. As used herein, a "polar group" refers to a group of atoms in which the distribution of electrons is uneven. Non-limiting examples of polar groups include a nitrile group, an amino group, and a hydroxyl group. It is appreciated that various polar groups can also be used as a hydrophilic functional group as previously described.

Non-limiting examples of polymerizable ethylenically unsaturated hydrophilic monomers include hydrophilic (meth)acrylate monomers, (meth)acrylic acid, (meth)acrylic acid salts, acrylonitrile, hydrophilic (meth)acrylamide monomers, methyl vinyl ether, ethyl vinyl ether, vinyl acetate, vinyl propionate, and combinations thereof. When a polymerizable ethylenically unsaturated hydrophilic (meth)acrylate monomer is used, an example of the hydrophilic (meth)acrylate monomer may be represented by Chemical Formula (II):

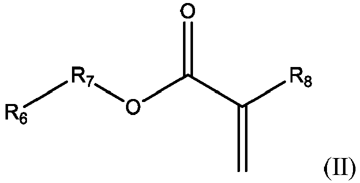

With respect to Chemical Formula (II), R₆ can be a hydroxyl group, an amino group, a methyl group, or hydrogen. R₇ can be a C₁-C₄ alkylene when R₆ is a hydroxyl group or an amino group. Alternatively, R₇ can be a C₁ alkylene when R₆ is a methyl group or hydrogen. R₈ can be a methyl group or hydrogen.

Non-limiting examples of suitable polymerizable ethylenically unsaturated hydrophilic (meth)acrylate monomers include methyl (meth)acrylate, ethyl (meth)acrylate, hydroxymethyl (meth)acrylate, hydroxyethyl (meth)acrylate, hydroxypropyl (meth)acrylate, and combinations thereof.

Further, when a polymerizable ethylenically unsaturated hydrophilic (meth)acrylamide monomer is used, an example of the polymerizable ethylenically unsaturated hydrophilic (meth)acrylamide monomer can be represented by Chemical Formula (III):

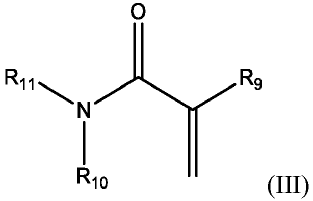

With respect to Chemical Formula (III), R₉ and R₁₀ can each independently be a methyl group or hydrogen, and R₁₁ can be a hydrogen or a C₁-C₂ alkyl group such that the total number of carbon atoms of R₁₀ and R₁₁ is less than 3. Optionally, a hydrophilic group can be present. Alternatively, R₁₀ and R₁₁ can each independently be a higher alkyl group such as a C₃ alkyl group or higher when a hydrophilic group or groups are present such that an equivalent ratio of total carbon atoms to hydrophilic functional groups on the R₁₀ and R₁₁ is equal to or less than 4:1.

Non-limiting examples of suitable polymerizable ethylenically unsaturated hydrophilic (meth)acrylamide monomers include acrylamide, methacrylamide, N,N-dimethylacrylamide, N,N-dimethyl methacrylamide, and combinations thereof.

In addition, the polymerizable ethylenically unsaturated hydrophilic monomer can also include, but is not limited to, monomers that comprise a polymerizable ethylenically unsaturated group, two or more ether linkages, a C₂-C₃ hydrocarbon chain positioned between the oxygen atoms of each ether linkage, and optionally hydrophilic functional groups. These monomers can also be alkoxy or hydroxy terminated at one end such that the hydrophilic properties are retained. For example, the monomers can be, but are not limited to, ethoxy or methoxy terminated. Such monomers include, but are not limited to, 2-(2-ethoxyethoxy)ethyl acrylate, 2-(2-ethoxyethoxy)methyl acrylate, polyethylene glycol (meth)acrylate, polypropylene glycol (meth)acrylate, and combinations thereof.

Further, the polymerizable ethylenically unsaturated hydrophilic monomer can also comprise a (meth)acrylate monomer comprising one ether linkage such as 2-methoxyethyl acrylate, 2-ethoxyethyl acrylate, and combinations thereof.

The polymerizable ethylenically unsaturated hydrophilic monomer used to prepare the lipophilic/hydrophilic polymer comprises at least 20 weight %, such as at least 30 weight %, based on the total weight of the reactants. The polymerizable ethylenically unsaturated hydrophilic monomer used to prepare the lipophilic/hydrophilic polymer comprises up to 75 weight %, such as up to 70 weight %, or up to 60 weight %, based on the total weight of the reactants. The polymerizable ethylenically unsaturated hydrophilic monomer used to prepare the lipophilic/hydrophilic polymer comprises a range from 20 to 75 weight %, such as from 30 to 70 weight %, based on the total weight of the reactants.

### (c) Polymerizable Ethylenically Unsaturated Lipophilic Monomer

In accordance with the present invention, the mixture of reactants used to prepare the lipophilic/hydrophilic polymer further includes a polymerizable ethylenically unsaturated lipophilic monomer that is different from the previously described components (a) and (b). As used herein, a "polymerizable ethylenically unsaturated lipophilic monomer" refers to a polymerizable ethylenically unsaturated monomer with an affinity for fats, oils, lipids, and non-polar solvents. The polymerizable ethylenically unsaturated lipophilic monomer can include a polymerizable mono-ethylenically unsaturated lipophilic monomer, or, alternatively, a polymerizable multi-ethylenically unsaturated lipophilic monomer.

The polymerizable ethylenically unsaturated lipophilic monomer can include, but is not limited to, a monomer that does not include a hydrophilic functional group and which comprises a linear, branched, and/or cyclic (for example, a linear aliphatic, branched aliphatic, cycloaliphatic, and/or cycloaromatic) C₃-C₃₀ hydrocarbon, such as a C₃-C₂₀, C₃-C₁₅, C₃-C₁₀, C₄-C₃₀, C₅-C₃₀, or C₁₀-C₃₀ hydrocarbon, and a polymerizable ethylenically unsaturated group. Alternatively, the polymerizable ethylenically unsaturated lipophilic monomer can include some hydrophilic functional groups when the monomer has a sufficiently long/large hydrocarbon chain or ring such that the monomer retains its lipophilic properties due to the presence of the hydrocarbons. For example, the polymerizable ethylenically unsaturated lipophilic monomer can include hydrophilic groups such that an equivalent ratio of carbon atoms to hydrophilic functional groups on the hydrocarbon chains or rings is greater than 4:1, or greater than 5:1, or greater than 6:1, or greater than 8: 1, or greater than 10: 1, or greater than 15: 1.

Non-limiting examples of polymerizable ethylenically unsaturated lipophilic monomers include lipophilic (meth)acrylate monomers, lipophilic (meth)acrylamide monomers, styrene, C₃-C₃₀ vinyl esters, C₃-C₃₀ vinyl ethers, and combinations thereof.

When a polymerizable ethylenically unsaturated lipophilic (meth)acrylate monomer is used, an example of the polymerizable ethylenically unsaturated lipophilic (meth)acrylate monomer can be represented by Chemical Formula (IV):

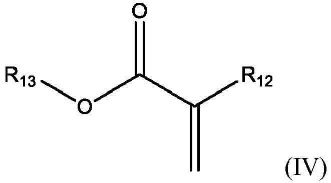

With respect to Chemical Formula (IV), R₁₃ can be a C₃-C₃₀ alkyl group, a C₃-C₂₀ alkyl group, a C₃-C₁₈ alkyl group, a C₄-C₃₀ alkyl group, or a C₅-C₃₀ alkyl group. R₁₂ can be a methyl group or hydrogen.

Non-limiting examples of suitable polymerizable ethylenically unsaturated lipophilic C₃-C₃₀ vinyl esters can be represented by Chemical Formula (V):

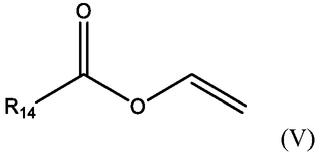

With respect to Chemical Formula (V), R₁₄ can be a C₃-C₃₀ alkyl group, a C₃-C₂₀ alkyl group, a C₃-C₁₈ alkyl group, a C₄-C₃₀ alkyl group, or a C₅-C₃₀ alkyl group.

Non-limiting examples of suitable polymerizable ethylenically unsaturated lipophilic C₃-C₃₀ vinyl ethers can be represented by Chemical Formula (VI):

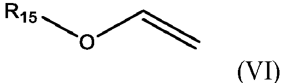

With respect to Chemical Formula (VI), R₁₅ can be a C₃-C₃₀ alkyl group, a C₃-C₂₀ alkyl group, a C₃-C₁₈ alkyl group, a C₄-C₃₀ alkyl group, or a C₅-C₃₀ alkyl group.

Further non-limiting examples of suitable polymerizable ethylenically unsaturated lipophilic monomers include butyl (meth)acrylate, hexyl (meth)acrylate, heptyl (meth)acrylate, octyl (meth)acrylate, 2-ethylhexyl (meth)acrylate, nonyl (meth)acrylate, decyl (meth)acrylate, undecyl (meth)acrylate, dodecyl (meth)acrylate, lauryl (meth)acrylate, stearyl (meth)acrylate, isobutyl (meth)acrylate, isobornyl (meth)acrylate, cyclohexyl (meth)acrylate, styrene, butyl vinyl ether, hexyl vinyl ether, heptyl vinyl ether, octyl vinyl ether, nonyl vinyl ether, decyl vinyl ether, undecyl vinyl ether, dodecyl vinyl ether, lauryl vinyl ether, stearyl vinyl ether, vinyl butyrate, vinyl isobutyrate, vinyl valerate, vinyl-2-ethyl-hexanoate, vinyl isooctanoate, vinyl nonate, vinyl decanoate, vinyl undecanoate, vinyl laurate, vinyl stearate, and combinations thereof. Other non-limiting examples include lipophilic (meth)acrylamide monomers such as those represented by Chemical Formula (III), but in which the total number of carbon atoms in R₁₀ and R₁₁ is equal to or greater than 3, and if hydrophilic groups are present, the equivalent ratio of carbon atoms to hydrophilic functional groups of R₁₀ and R₁₁ is greater than 4:1, or greater than 5:1, or greater than 6: 1, or greater than 8: 1, or greater than 10: 1, or greater than 15: 1.

The polymerizable ethylenically unsaturated lipophilic monomer used to prepare the lipophilic/hydrophilic polymer comprises at least 10 weight %, such as at least 20 weight %, or at least 30 weight %, based on the total weight of the reactants. The polymerizable ethylenically unsaturated lipophilic monomer used to prepare the lipophilic/hydrophilic polymer comprises up to 60 weight %, such as up to 50 weight %, based on the total weight of the reactants. The polymerizable ethylenically unsaturated lipophilic monomer used to prepare the lipophilic/hydrophilic polymer can also comprise a range such as from 20 to 50 weight %, based on the total weight of the reactants.

### (d) Polymerizable Ethylenically Unsaturated Ionic Monomer

In accordance with the present invention, the mixture of reactants used to prepare the lipophilic/hydrophilic polymer can further include a polymerizable ethylenically unsaturated ionic monomer that is different from the previously described components (a), (b), and (c). For instance, the lipophilic/hydrophilic polymer described herein may be prepared from a mixture of reactants that includes: a non-ionic polymerizable ethylenically unsaturated alkoxysilane monomer; a non-ionic polymerizable ethylenically unsaturated hydrophilic monomer; a non-ionic polymerizable ethylenically unsaturated lipophilic monomer; and a polymerizable ethylenically unsaturated ionic monomer.

As used herein, an "ionic monomer" refers to a monomer having at least one anionic or cationic group and a corresponding counterion not taking part in the polymerization. That is, the ionic monomer carries a positive or negative charge which is balanced by the counterion. The ionic monomer can have one anionic or cationic group, typically the ionic monomer has one cationic group. For example, the counterions of the polymerizable ethylenically unsaturated ionic monomer can comprise anions including, but not limited to, bromide, chloride, and/or sulfate. The polymerizable ethylenically unsaturated ionic monomer can have one or more cationic groups including, but not limited to, ammonium groups such as primary, secondary, tertiary and quaternary ammonium groups, for example one quaternary ammonium group. The organic groups attached to the nitrogen atom in the ammonium group can be alkyl groups such as a C₁ to C₂₂, a C₁ to C₁₆, or a C₁ to C₁₀ alkyl group, or a C₁₀ to C₂₂ alkyl group. For instance, the ionic monomer can have (i) an ammonium group and (ii) a bromide, chloride, and/or sulfate counterion. The ionic monomer also includes a polymerizable ethylenically unsaturated group. The polymerizable ethylenically unsaturated ionic monomer can include a polymerizable mono-ethylenically unsaturated ionic monomer, or, alternatively, a polymerizable multi-ethylenically unsaturated ionic monomer.

An example of a polymerizable ethylenically unsaturated ionic monomer used to prepare the lipophilic/hydrophilic polymer can be represented by Chemical Formula (VII):

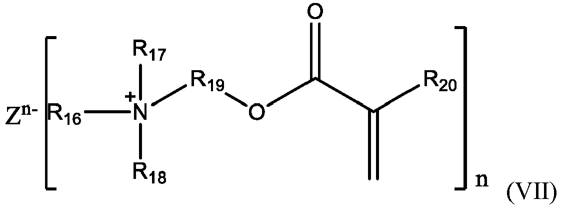

With respect to Chemical Formula (VII), Z can be bromide, chloride, or sulfate and "n" can be a value such as 1 or 2. R₁₆ can be hydrogen or an alkyl group, such as a C₁ to C₂₂, a C₁ to C₁₆, or a C₁ to C₁₀ alkyl group. R₁₇ can be hydrogen or an alkyl group, such as a C₁ to C₂₂, a C₁ to C₁₆, or a C₁ to C₁₀ alkyl group. R₁₈ can be an alkyl group such as a C₁₀ to C₂₂ alkyl group. R₁₉ can be an alkylene group such as a C₁-C₁₀ alkylene, such as a Ci-Cs alkylene, a C₁-C₆ alkylene, or a C₁-C₄ alkylene. R₂₀ can be a methyl group or hydrogen.

Non-limiting examples of suitable polymerizable ethylenically unsaturated ionic monomers include N-(2-(methacryloyloxy)methyl)-N,N-dimethyltetradecan-1-aminium bromide, N-(2-(methacryloyloxy)ethyl)-N,N-dimethyltetradecan-1-aminium bromide, and combinations thereof.

The polymerizable ethylenically unsaturated ionic monomer used to prepare the lipophilic/hydrophilic polymer can comprise at least 1 weight %, at least 5 weight %, or at least 10 weight %, based on the total weight of the reactants. The polymerizable ethylenically unsaturated ionic monomer used to prepare the lipophilic/hydrophilic polymer can comprise up to 50 weight %, up to 30 weight %, up to 20 weight %, or up to 16 weight %, based on the total weight of the reactants. The polymerizable ethylenically unsaturated ionic monomer used to prepare the lipophilic/hydrophilic polymer can comprise a range such as from 1 to 50 weight %, 5 to 30 weight %, 10 to 20 weight %, or 10 to 16 weight %, based on the total weight of the reactants.

Additional components can also be used to form the lipophilic/hydrophilic polymer of the present invention. For example, the mixture of reactants that can be used to prepare the lipophilic/hydrophilic polymer can further include a monomer and/or a polymer comprising a fluorine atom. Alternatively, the mixture of reactants can be substantially free, essentially free, or completely free of a monomer and/or a polymer comprising a fluorine atom. The term "substantially free" as used in this context means the mixture of reactants contain less than 1000 parts per million (ppm), "essentially free" means less than 100 ppm, and "completely free" means less than 20 parts per billion (ppb) of a monomer and/or a polymer comprising a fluorine atom based on the total weight of the reactants.

The mixture of reactants can be combined in a non-aqueous liquid medium to prepare a non-aqueous based lipophilic/hydrophilic polymer. The non-aqueous liquid medium can comprise any of the solvents described above. The non-aqueous liquid medium prevents the alkoxy groups on the silane from hydrolyzing and forming a silanol. This in turn prevents silanol condensation and reactions between the silanol groups and other functional groups such as hydroxyl groups.

The lipophilic/hydrophilic polymer can be formed using art recognized polymerization techniques as well as conventional additives such as emulsifiers, protective colloids, free radical initiators, and chain transfer agents known in the art. For instance, various types of polymerization aids can used to initiate polymerization including, but not limited to, peroxides, peroxide derivatives such as peroxy acids, metals such as transition metals, inorganic salts, Lewis acids, azo type compounds, e.g., 2,2'azobis-(2-methylbutyronitrile), and combinations thereof.

As indicated, the various combination of reactants described herein can be reacted together in a non-aqueous liquid medium to form the non-aqueous based lipophilic/hydrophilic polymer of the present invention. The process for forming the lipophilic/hydrophilic polymer can be chosen to produce a particular polymer architecture. For example, the mixture of reactants can be reacted to form a linear random copolymer architecture or a linear block copolymer architecture. Other non-limiting examples of polymer architectures that can be formed include branched type architectures such as comb, brush, and hyperbranched architectures.

As used herein, a "random copolymer" refers to a polymer with multiple monomer units arranged in an irregular, random order. A "block copolymer" refers to a polymer with multiple sequences, or blocks, of the same monomer alternating in series with different monomer blocks. The block copolymer can be a diblock copolymer (copolymer with two types of blocks), a triblock copolymer (copolymer with three types of blocks), a multiblock copolymer (copolymer with four or more types of blocks), and combinations thereof.

The term "comb polymer" refers to a polymer comprising a main chain (or backbone) with multiple branch points from which a side chain emanates such that the polymer resembles a comb-like shape in the planar projection. Comb polymers typically have two or more branch points with a functionality of three, as is described in "Lattice models of branched polymers: combs and brushes", Lipson et al., Macromolecules, 1987, 20(1), at pages 186-190. A "branch point" refers to a point on a polymer main chain at which a branch is attached. A "branch," also referred to as a "side chain" or "pendant chain or group," is an offshoot from the polymer main chain.

The term "brush polymer" refers to a polymer comprising a main chain (or backbone) with multiple branch points from which a side chain emanates such that the polymer resembles a brush-like shape in the planar projection. Brush polymers typically have at least one branch point with a functionality of greater than three, as is described in "Lattice models of branched polymers: combs and brushes", Lipson et al., Macromolecules, 1987, 20(1), at pages 186-190, the relevant portions of which are incorporated herein by reference. Further, a "hyperbranched polymer" refers to a polymer that is a highly branched macromolecule with a three-dimensional dendritic architecture as defined in Prog. Polym. Sci. 29 (2004), pgs. 183-275, Gao et al.

The lipophilic/hydrophilic polymer prepared from the reactants described herein can have various pendant and/or terminal groups. For example, the lipophilic/hydrophilic polymer can have at least one lipophilic pendant and/or terminal group, at least one hydrophilic pendant and/or terminal group, at least one pendant and/or terminal group having an alkoxysilane functional group, at least one ionic pendant and/or terminal group, and combinations thereof. As will be appreciated by those skilled in the art, the pendant and/or terminal groups of the lipophilic/hydrophilic polymer are formed from the different reactants described herein. For example, the hydrophilic/lipophilic polymer can include: a pendant group comprising an ester linkage, a C₁-C₄ hydrocarbon, and a hydrophilic functional group; a pendant group comprising an ester linkage and a C₃-C₃₀ hydrocarbon, and which is free of a hydrophilic functional group; and a pendant group comprising an ester linkage and an alkoxysilane. To modify the properties of the lipophilic/hydrophilic polymer, additional reactants may be used such as a monomer comprising a fluorine atom to improve anti-friction properties of the final polymer.

The different polymer architectures previously described can also be used to dictate the properties of the lipophilic/hydrophilic polymer. For example, the different polymer architectures can be used to form pendant groups in a particular order and at particular segments on the lipophilic/hydrophilic polymer. The different polymer architectures can also be used to form additional pendant chains on the lipophilic/hydrophilic polymer. For instance, a comb, brush, or hyperbranched lipophilic/hydrophilic polymer can have pendant macromonomers extending from the main chain or backbone. As used herein, a "macromonomer" refers to a polymer or oligomer the molecules of which each have at least one group, such as an ethylenically unsaturated group or a binding site, such that it acts as a monomer molecule. A non-limiting example of a macromonomer is a (meth)acrylate polymer with comprises an ethylenically unsaturated group which is capable of polymerization. Such a macromonomer can be prepared under conditions described in the examples or by other methods known in the art. Other macromonomers known in the art include, but are not limited to, polyethylene or polypropylene glycol (meth)acrylate macromonomers.

Various methods known in the art can be used to incorporate the macromonomers onto the lipophilic/hydrophilic polymer including, but not limited to, various grafting techniques, including "grafting through" in which the macromonomer is co-polymerized with the monomers that form the polymer main chain or backbone, or "grafting on" or "grafting to" of a macromonomer chain onto a main chain or backbone that is already formed. The macromonomer can be pre-prepared by reacting any combination of monomers such as any of the monomers previously described. The macromonomer can comprise all hydrophilic monomers, all lipophilic monomers, or combinations thereof. As such, the lipophilic/hydrophilic polymer previously described can comprise a lipophilic macromonomer chain, a hydrophilic macromonomer chain, or a combination thereof. If desired, the lipophilic/hydrophilic polymer may comprise more than one macromonomer.

The lipophilic/hydrophilic polymer of the present invention can have a number average molecular weight (Mn) of at least 500 g/mol, at least 1,000 g/mol, or at least 5,000 g/mol. The lipophilic/hydrophilic polymer of the present invention can have a number average molecular weight of up to 30,000 g/mol, up to 20,000 g/mol, or up to 10,000 g/mol. The lipophilic/hydrophilic polymer can also have a number average molecular weight ranges such as from 500 to 30,000 g/mol or from 5,000 to 20,000 g/mol. The number average molecular weight is determined by gel permeation chromatography relative to linear polystyrene standards of 800 to 900,000 Da with tetrahydrofuran as the mobile phase at a flow rate of 1 ml min⁻¹.

The lipophilic/hydrophilic polymer of the present invention can have a polydispersity index (PDI) of at least 1, at least 3, or at least 5. The lipophilic/hydrophilic polymer can have a polydispersity index (PDI) of up to 20, up to 10, up to 8, or up to 6. The lipophilic/hydrophilic polymer can also have a polydispersity index (PDI) range such as from 1 to 20, from 1 to 10, from 3 to 8, or from 5 to 6. The polydispersity index (PDI) values represent a ratio of the weight average molecular weight (Mw) to the number average molecular weight (Mn) of the polymer (i.e., Mw/Mn). The weight average molecular weight and polydispersity index, like the number average molecular weight, are determined by gel permeation chromatography relative to linear polystyrene standards of 800 to 900,000 Da with tetrahydrofuran as the mobile phase at a flow rate of 1 ml min⁻¹.

The lipophilic/hydrophilic polymer of the present invention can also have a glass transition temperature (Tg) of equal to or less than 120°C, of equal to or less than 100°C, of equal to or less than 60°C, of equal to or less than 20°C, of equal to or less than 0°C, of equal to or less than -10°C, of equal to or less than -30°C, or of at least -50°C. The lipophilic/hydrophilic polymer can also have a glass transition temperature range such as from -50°C to 120°C, from -30°C to 100°C, or from 0°C to 80°C. The glass transition temperature is determined by differential scanning calorimetry with a Perkin Elmer DSC-7. Heating Cycle: Ramp from -65 °C to 220 °C, 2 heat scans. Heating Rate: 20 °C/min, Cooling Rate 80 °C/min.

The present invention is also directed to an anti-fingerprint coating composition that includes at least one of the lipophilic/hydrophilic polymers previously described. As used herein, the term "anti-fingerprint coating composition" refers to a coating composition that masks or prevents fingerprint marks and smudges. The lipophilic/hydrophilic polymers used with the anti-fingerprint composition can comprise at least 0.1 weight %, at least 0.3 weight %, at least 0.5 weight %, or at least 1 weight %, based on the total solids weight of the coating composition. The lipophilic/hydrophilic polymers can comprise up to 100 weight %, up to 70 weight %, up to 50 weight %, up 30 weight %, up to 10 weight %, or up to 2 weight %, based on the total solids weight of the coating composition. The lipophilic/hydrophilic polymers can also comprise a range such as from 0.1 to 60 weight %, from 0.3 to 30 weight %, from 0.5 to 10 weight %, or from 0.5 to 2 weight %, based on the total solids weight of the coating composition, with the balance of the coating composition comprising other components that can be used in the coating compositions and which may include, but are not limited to, additional components that form a sol-gel.

As such, the anti-fingerprint coating composition can also include additional components that can form a sol-gel. As used herein, a "sol-gel" refers to a composition made as a solution and formed into a gel which then forms an open lattice structure when dried. Sol-gels are dynamic systems, wherein a solution gradually evolves into a gel-like two-phase system containing both a liquid phase and solid phase, whose morphologies range from discrete particles to continuous polymer networks within the continuous liquid phase. Components that form sol-gels and which can be used in the coating compositions of the present invention include, but are not limited to, siloxane based compositions, silane based compositions, and/or compositions that include oxides of other metals including, but not limited to, titanium. Commercially available sol-gel compositions that can be used are available from PPG Industries, Inc. under the trade name HI-GARD^{®}. For example, non-limiting commercially available sol-gel compositions that can be used are available from PPG Industries, Inc. under the trade name HI-GARD^{®} 1080 and HI-GARD^{®} 2000.

Components that can form sol-gels and which can be used with the coating composition of the present invention include, but are not limited to, silanes, such as alkoxysilanes for example, that do not contain an ethylenically unsaturated group. For instance, the coating composition can also comprise alkyl substituted alkoxysilanes that do not contain an ethylenically unsaturated group, polyether functionalized alkoxysilanes that do not contain an ethylenically unsaturated group, tetra-alkoxysilanes that do not contain an ethylenically unsaturated group, and combinations thereof.

Non-limiting examples of alkyl substituted alkoxysilanes include, but are not limited, to trimethylmethoxysilane, trimethylethoxysilane, trimethylbutoxysilane, dimethyldiethoxysilane, dimethyldibutoxysilane, dimethyldiethoxysilane, methyltriethoxysilane, methyltributoxysilane, ethyltrimethoxysilane, ethyltriethoxysilane, isopropyltriethoxysilane, isobutyltriethoxysilane, hexyltriethoxysilane, octyltriethoxysilane, diethyldiethoxysilane, and combinations thereof. A suitable alkyl substituted alkoxysilane is commercially available from Evonik under the trade name DYNASYLAN^{®} OCTEO.

Non-limiting examples of polyether functionalized alkoxysilanes include, but are not limited to, polyethylene glycol functionalized alkoxysilanes, polypropylene glycol functionalized alkoxysilanes, and combinations thereof. A suitable polyethylene glycol functionalized alkoxysilane is commercially available from Evonik under the trade name DYNASYLAN^{®} 4148.

Non-limiting examples of tetra-alkoxysilanes include, but are not limited to, tetramethoxysilane, tetraethoxysilane, tetrapropoxysilane, tetrabutoxysilane, tetraisopropoxysilane, tetraisobutoxysilane, and combinations thereof.

The previously described alkoxysilanes can be added directly into the coating composition and mixed with the lipophilic/hydrophilic polymer. Alternatively, the alkoxysilanes are first mixed with water to form silanol functionalized silanes and then added to the coating composition. For instance, tetra-alkoxysilanes can be mixed with water to form silanol functionalized silanes and then added to the coating composition comprising the lipophilic/hydrophilic polymer.

The silanes described above can be added to the coating composition and reacted with a portion of the lipophilic/hydrophilic polymer such as during curing for example. In order to react these components, the coating composition can also include a catalyst. For instance, the coating composition can also include a protonic acid. As used herein, a "protonic acid" refers to an acid that forms positive hydrogen ions in an aqueous solution. The protonic acid can include, but is not limited to, carboxylic acids, hydrogen halides, sulfuric acid, nitric acid, or combinations thereof.

Non-limiting examples of suitable carboxylic acids include formic acid, acetic acid, propionic acid, butyric acid, capric acid, benzoic acid, and combinations thereof. Further, non-limiting examples of hydrogen halides include, but are not limited to, hydrogen fluoride, hydrogen chloride, hydrogen bromide, and combinations thereof.

The protonic acid used with the coating composition of the present invention can be diluted in an aqueous solution to form a desired acid concentration. For example, the protonic acid can be mixed in water to form a 10% (v/v), or a 5% (v/v), or a 1% (v/v), or a 0.5% (v/v), protonic acid aqueous solution.

In some examples, the coating composition of the present invention comprises the lipophilic/hydrophilic polymer, an alkyl substituted alkoxysilane such as octyltriethoxysilane, and nitric acid diluted in an aqueous solution. After applying the coating composition, the composition can be heated to cure and react the components.

The coating composition of the present invention can also comprise the lipophilic/hydrophilic polymer, an alkyl substituted alkoxysilane such as octyltriethoxysilane, a polyether functionalized alkoxysilane such as a polyethylene glycol functionalized alkoxysilane, and nitric acid diluted in an aqueous solution. After applying the coating composition, the composition can be heated to cure and react the components.

In addition, in some examples, the coating composition of the present invention can comprise the lipophilic/hydrophilic polymer, a silanol functional silane formed by hydrolysis of tetraethoxysilane, and nitric acid diluted in an aqueous solution. After applying the coating composition, the composition can be heated to cure and react the components.

The addition of the sol-gel components previously described were found to improve the durability of coatings produced from the anti-fingerprint coating compositions of the present invention. For instance, the addition of the sol-gel components helped improve the abrasion resistance of the anti-fingerprint coatings described herein without affecting optical clarity of the substrate upon which the coatings were applied.

When used with the anti-fingerprint coating compositions, the sol-gel components can comprise at least 0.1 weight %, at least 0.3 weight %, or at least 0.5 weight %, based on the total solids weight of the coating composition. The sol-gel components can comprise up to 50 weight %, up to 30 weight %, up to 10 weight %, or up to 5 weight %, based on the total solids weight of the coating composition. The sol-gel components can also comprise a range such as from 0.1 to 50 weight %, from 0.3 to 30 weight %, from 0.5 to 10 weight %, or from 0.5 to 5 weight %, based on the total solids weight of the coating composition.

It will be appreciated that the lipophilic/hydrophilic polymers of the present invention can form all or part of the resins used with the coating composition. Alternatively, one or more additional resins can also be used in the coating composition. For example, the coating composition can also include any of a variety of thermoplastic and/or thermosetting compositions known in the art. As used herein, the term "thermosetting" refers to compositions that "set" irreversibly upon curing or crosslinking, wherein the polymer chains of the polymeric components are joined together by covalent bonds. This property is usually associated with a cross-linking reaction of the composition constituents often induced, for example, by heat or radiation. Curing or crosslinking reactions also may be carried out under ambient conditions. Once cured or crosslinked, a thermosetting composition will not melt upon the application of heat and is insoluble in solvents. The lipophilic/hydrophilic polymer may remain unreacted when used with the additional resins or it may participate in the crosslinking reaction. As noted, the additional resin can also include a thermoplastic composition. As used herein, the term "thermoplastic" refers to resins that include polymeric components that are not joined by covalent bonds and, thereby, can undergo liquid flow upon heating and are soluble in solvents.

The additional resins can be selected from, for example, polyurethanes, acrylic polymers, polyester polymers, polyamide polymers, polyether polymers, polysiloxane polymers, polyepoxy polymers, epoxy resins, vinyl resins, copolymers thereof, and mixtures thereof. Thermosetting or curable coating compositions typically comprise resins having functional groups. The additional resin can have any of a variety of reactive functional groups including, but not limited to, carboxylic acid groups, amine groups, epoxide groups, hydroxyl groups, thiol groups, carbamate groups, amide groups, urea groups, isocyanate groups (including blocked isocyanate groups), N-hydroxymethylene and N-alkoxymethylene groups (such as found in melamine/formaldehyde resins), and combinations thereof. Appropriate mixtures of resins may also be used in the preparation of the present coating compositions.

Thermosetting coating compositions typically comprise a crosslinker known in the art to react with the functionality used in the coating compositions. As used herein, the term "crosslinker" refers to a molecule comprising two or more functional groups that are reactive with other functional groups and which is capable of linking two or more monomers or polymer molecules through chemical bonds. The thermosetting compositions can also have functional groups that are reactive with themselves; in this manner, such resins of the thermosetting compositions are self-crosslinking.

The additional resins can comprise at least 0.1 weight %, at least 0.3 weight %, or at least 0.5 weight %, based on the total solids weight of the coating composition. The additional resin can comprise up to 50 weight %, up to 30 weight %, up to 10 weight %, or up to 2 weight %, based on the total solids weight of the coating composition. The additional resin can also comprise a range such as from 0.1 to 50 weight %, from 0.3 to 30 weight %, from 0.5 to 10 weight %, or from 0.5 to 2 weight %, based on the total solids weight of the coating composition.

The anti-fingerprint coating compositions of the present invention can also include other optional materials. For example, the coating compositions can also comprise a colorant. As used herein, "colorant" refers to any substance that imparts color and/or other opacity and/or other visual effect to the composition. The colorant can be added to the coating in any suitable form, such as discrete particles, dispersions, solutions, and/or flakes. A single colorant or a mixture of two or more colorants can be used in the coatings of the present invention.

Example colorants include pigments (organic or inorganic), dyes and tints, such as those used in the paint industry and/or listed in the Dry Color Manufacturers Association (DCMA), as well as special effect compositions. A colorant may include, for example, a finely divided solid powder that is insoluble, but wettable, under the conditions of use. A colorant can be organic or inorganic and can be agglomerated or non-agglomerated. Colorants can be incorporated into the coatings by use of a grind vehicle, such as an acrylic grind vehicle, the use of which will be familiar to one skilled in the art.

Example pigments and/or pigment compositions include, but are not limited to, carbazole dioxazine crude pigment, azo, monoazo, diazo, naphthol AS, salt type (flakes), benzimidazolone, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPPBO red"), titanium dioxide, carbon black, and mixtures thereof. The terms "pigment" and "colored filler" can be used interchangeably.

Example dyes include, but are not limited to, those that are solvent and/or aqueous based such as phthalo green or blue, iron oxide, bismuth vanadate, anthraquinone, and peryleneand quinacridone.

Example tints include, but are not limited to, pigments dispersed in water-based or water miscible carriers such as AQUA-CHEM 896 commercially available from Degussa, Inc., CHARISMA COLORANTS and MAXITONER INDUSTRIAL COLORANTS commercially available from Accurate Dispersions Division of Eastman Chemical, Inc.

Other non-limiting examples of materials that can be used with the coating compositions of the present invention include plasticizers, abrasion resistant particles, corrosion resistant particles, corrosion inhibiting additives, fillers including, but not limited to, micas, talc, clays, and inorganic minerals, anti-oxidants, hindered amine light stabilizers, UV light absorbers and stabilizers, surfactants, flow and surface control agents, thixotropic agents, reactive diluents, catalysts, reaction inhibitors, and other customary auxiliaries.

When used with the anti-fingerprint coating compositions, pigment particles and other colorants can comprise equal to or less than 10 weight %, equal to or less than 7 weight %, equal to or less than 4 weight %, or up to and including 1 weight %, based on the total solids weight of the coating composition. The pigment particles can also comprise a range such as from 0.1 to 10 weight %, from 0.1 to 8 weight %, or from 0.5 to 4 weight %, based on the total solids weight of the coating composition.

The coatings of the present invention can be applied to a wide range of substrates known in the coatings industry. For example, the coatings of the present invention can be applied to automotive substrates, industrial substrates, packaging substrates, wood flooring and furniture, apparel, electronics, including housings and circuit boards, glass and transparencies, sports equipment, including golf balls, and the like. These substrates can be, for example, metallic or non-metallic. Non-metallic substrates include polymeric, plastic, polyester, polyolefin, polyamide, cellulosic, polystyrene, polyacrylic, poly(ethylene naphthalate), polypropylene, polyethylene, nylon, EVOH, polylactic acid, other "green" polymeric substrates, poly(ethyleneterephthalate) (PET), polycarbonate, polycarbonate acrylonitrile butadiene styrene (PC/ABS), polyamide, wood, veneer, wood composite, particle board, medium density fiberboard, cement, stone, sapphire, glass, paper, cardboard, textiles, leather, both synthetic and natural, and the like. Non-limiting examples of glass substrates include conventional untinted soda-lime-silica glass, i.e., "clear glass", or tinted or otherwise colored glass, borosilicate glass, GORILLA^{®} glass, leaded glass, tempered, untempered, annealed, or heat-strengthened glass. The glass may be of any type, such as conventional float glass or flat glass, and may be of any composition having any optical properties, e.g., any value of visible radiation transmission, ultraviolet radiation transmission, infrared radiation transmission, and/or total solar energy transmission. Metallic substrates include, but are not limited to, tin, steel (including electrogalvanized steel, cold rolled steel, hot-dipped galvanized steel, among others), aluminum, aluminum alloys, zinc-aluminum alloys, steel coated with a zinc-aluminum alloy, and aluminum plated steel.

The coatings of the present invention are particularly useful when applied to glass substrates, plastic substrates, and mixtures thereof that are found on consumer electronic products. For example, the coatings of the present invention can be applied to glass and/or plastic substrates found on laptops, tablets, cellular phones, other handheld electronic devices, and the like. Further, because the lipophilic/hydrophilic polymer used in the coating compositions of the present invention is prepared in a non-aqueous medium, the alkoxysilane groups, hydrophilic groups, and lipophilic groups can interact with the substrate, environment in which it is applied to the substrate, and additional materials found in the composition.

The coatings formed from the coating compositions of the present invention can be applied by any means standard in the art, such as spin coating, electrocoating, spraying, electrostatic spraying, dipping, rolling, brushing, and the like. The coatings of the present invention can be applied to a dry film thickness of less than 26,000 nanometers (nm), less than 10,000 nm, less than 5,000 nm, less than 1,000 nm, less than 500 nm, less than 100 nm, less than 50 nm, or less than 20 nm. The coatings of the present invention can be applied to a dry film thickness range such as from 1 nm to 26,000 nm, from 1 nm to 500 nm, or from 1 nm to 20 nm.

As indicated above, the coating compositions can be applied to a substrate and dried or cured to form coatings thereon. The coatings deposited from the coating compositions described herein have been found to exhibit superior anti-fingerprinting properties. That is, the coatings deposited from the coating compositions described herein have been found to mask or prevent fingerprint marks and smudges, and the marks and smudges that are present on the coating can be easily removed based on an easy-to-clean test. For example, the coatings generally exhibit an anti-fingerprint test number of 2 and generally require less than 10 swipes to remove the fingerprint marks and smudges that are present on the coatings.

The anti-fingerprint test used herein requires the following steps: (1) apply an anti-fingerprinting coating of the present invention to uncoated glass; (2) apply a single fingerprint to the coating; and (3) determine the visibility of the fingerprint. The fingerprint visibility is rated based on the visual inspection where a zero means that there was no visible fingerprint and "5" means a visible fingerprint that would be seen on uncoated glass. As previously noted, the coatings of the present invention generally exhibit an anti-fingerprint test value of 2 with some instances of 1 or 3.

The easy-to-clean test used herein requires the following steps: (1) apply an anti-fingerprinting coating of the present invention to uncoated glass; (2) apply a single fingerprint to the coating; and (3) determine the number of swipes that is required to completely remove the fingerprint residue from the coated surface with a dry optical cleaning cloth. As previously noted, the coatings of the present invention generally require less than 10 swipes, less than 8 swipes, less than 6 swipes, less than 4 swipes, or less than 3 swipes to remove the fingerprint marks and smudges that are present on the coated surface. In some instances, up to 10 swipes to remove the fingerprint marks and smudges from the coated surface can be required.

The coatings deposited from the coating compositions described herein also exhibit other properties desired in a coating including, but not limited to, good adhesion and durability. For example, the coatings exhibit good water and methylene iodide contact angles before and after being subjected to abrasion testing.

The coatings deposited from the coating compositions of the present invention can exhibit a water contact angle of at least 20, at least 40, at least 50, or at least 60. The coatings can also exhibit a water contact of up to 110, up to 100, up to 90, or up to 80. The coatings can also exhibit a water contact angle range such as from 20 to 110, 40 to 100, or 60 to 90. The water contact angles are determined by a Kruss DSA100 Hardness Tester using 2 µL drops of water.

The coatings deposited from the coating compositions of the present invention can exhibit a methylene iodide angle of at least 20 or at least 30. The coatings can also exhibit a methylene iodide contact of up to 60 or up to 50. The coatings can also exhibit a methylene iodide contact angle range such as from 20 to 60, 30 to 50, or 35 to 50. The methylene iodide contact angles are determined by a Kruss DSA100 Hardness Tester using 2 µL drops of methylene iodide.

The coatings deposited from the coating compositions of the present invention can also be prepared as transparent coatings that allow good light transmittance. For instance, the coatings can be prepared as transparent coatings that allow at least 80% light transmittance, at least 85% light transmittance, or at least 90% light transmittance. Transmittance measurements are determined by a Perkin Elmer Lambda 950 UV/Vis/NIR Spectrophotometer with a wavelength range of 400-800 nm. As used herein, the term "transparent" refers to a coating, wherein a surface beyond the coating is visible to the naked eye when viewed through the coating. Further, the term "transmittance" refers to the amount of light that passes through a coating or film divided by the total amount of light incident upon the sample.

The following examples are presented to demonstrate the general principles of the invention. The invention should not be considered as limited to the specific examples presented. All parts and percentages in the examples are by weight unless otherwise indicated.

### EXAMPLE 1

### Preparation of a lipophilic/hydrophilic linear random co-polymer

A lipophilic/hydrophilic polymer according to the present invention was prepared from the components listed in Table 1.

**Table 1**

| **Components** | **Weight (grams)** |
|---|---|
| **Charge 1** | |
| DOWANOL^{™} PM ¹ | 400.34 |

| **Charge 2** | |
|---|---|
| Stearyl methacrylate | 52.3 |
| 2-Hydroxyethyl methacrylate | 208.5 |
| 3-Methacryloxypropyltrimethoxysilane | 52.41 |

| **Charge 3** | |
|---|---|
| VAZO^{®} 67 ² | 24.81 |
| DOWANOL^{™} PM ¹ | 120.23 |

| **Charge 4** | |
|---|---|
| DOWANOL^{™} PM ¹ | 2.42 |

| **Charge 5** | |
|---|---|
| DOWANOL^{™} PM ¹ | 56.23 |
| VAZO^{®} 67 ² | 2.4 |

| | |
|---|---|
| ¹ Propylene glycol methyl ether, available from Dow Chemical Company. ² 2,2'azobis-(2-methylbutyronitrile), available from DuPont. | |

Charge 1 was transferred into a 3-neck round bottom flask with a condenser, nitrogen adaptor, mechanical stirrer, and addition funnel. The reaction was heated to 121°C under nitrogen purge with agitation. Charges 2 and 3 were added to the flask over two hours at 121°C, and Charge 4 was used to rinse Charge 3. The reaction was held for one hour. Charge 5 was added over 90 minutes, and heated for an additional 30 minutes. The resulting material was a clear solution with a solids content of 34.05% as determined after heating the sample at 125°C for three hours. Further, the resulting material had an average weight molecular weight (Mw) of 4796, a number average molecular weight (Mn) of 2197, and a polydispersity index (PDI) of 2.2. The Mw, Mn, and PDI was determined by gel permeation chromatography relative to linear polystyrene standards of 800 to 900,000 Da with tetrahydrofuran as the mobile phase at a flow rate of 1 ml min⁻¹ using a Waters 410 differential refractometer (RI detector) and two PLgel Mixed-C (300×7.5 mm) columns.

### EXAMPLE 2

### Preparation of a lipophilic/hydrophilic comb co-polymer

Part A: An acrylic macromonomer was prepared in a 300 mL continuous stir tank reactor (CSTR) system from the components listed in Table 2.

**Table 2**

| **Components** | **Weight (grams)** |
|---|---|
| 2-Hydroxyethyl acrylate | 1470.0 |
| Methyl methacrylate | 630.0 |
| Di-t-amyl peroxide | 10.5 |

The CSTR was charged with 300 mL of 2-butoxyethanol. The above components were weighed and stirred for 15 minutes at an agitation rate sufficient to provide good mixing, then charged to a feed tank while the reactor system was heating up to the reaction temperature (235°C). Collection of the resulting acrylic macromonomer was begun 15 minutes after the feed was started and continued for 25 minutes. The resulting material was a viscous liquid with a Mw of 8956, a Mn of 2455, and PDI of 3.6, as determined by gel permeation chromatography versus a polystyrene standard as previously described.

Part B: After the acrylic macromonomer was prepared, a lipophilic/hydrophilic comb co-polymer according to the present invention was prepared from the components listed in Table 3.

**Table 3**

| **Components** | **Weight (grams)** |
|---|---|
| **Charge 1** | |
| Acrylic macromonomer of Part A | 105.0 |
| Amyl alcohol | 234.5 |

| **Charge 2** | |
|---|---|
| LUPEROX^{®} 7M50 ³ | 21.0 |
| Amyl alcohol | 42.0 |

| **Charge 3** | |
|---|---|
| Styrene | 105.0 |
| Ethyl acrylate | 87.5 |
| 3-Methacryloxypropyltrimethoxysilane | 52.5 |

| **Charge 4** | |
|---|---|
| Amyl alcohol | 21.0 |

| **Charge 5** | |
|---|---|
| Amyl alcohol | 21.0 |

| **Charge 6** | |
|---|---|
| LUPEROX^{®} 7M50 ³ | 3.5 |
| Amyl alcohol | 10.5 |
| **Charge 7** | |
| Amyl alcohol | 21.0 |

| | |
|---|---|
| ³ t-butyl peroxyacetate, 50% solution in OMS, available from Arkema, Inc. | |

Charge 1 was added to a reactor equipped with a stirrer, thermocouple, and condenser, and N₂ inlet. An N₂ blanket was applied and the reaction mixture was heated to reflux. Charge 2 was added over 135 minutes; five minutes after Charge 2 was begun, Charge 3 was started. Charges 4 and 5 were then added as rinses for Charges 3 and 2, respectively, upon completion. After the addition of Charge 5, the reaction mixture was held at temperature for 60 minutes. Charge 6 was then added over 30 minutes, with Charge 7 added as a rinse. The reaction mixture was then held for 60 minutes. The resulting material was a slightly hazy, viscous resin with a solids content of 50.08% as determined after heating the sample at 110°C for one hour. Further, the resulting material had a Mw of 21002, a Mn of 4494, and a PDI of 4.7, as determined by gel permeation chromatography versus a polystyrene standard as previously described.

### EXAMPLE 3

### Preparation of a lipophilic/hydrophilic linear random co-polymer

A lipophilic/hydrophilic linear random co-polymer according to the present invention was prepared from the components listed in Table 4.

**Table 4**

| **Components** | **Weight (grams)** |
|---|---|
| **Charge 1** | |
| Amyl alcohol | 91.66 |

| **Charge 2** | |
|---|---|
| 2-Hydroxymethyl acrylate | 25.00 |
| Methyl methacrylate | 10.08 |
| Styrene | 37.97 |
| Ethyl acrylate | 30.12 |
| 3-Methacryloxypropyltrimethoxysilane | 18.36 |

| **Charge 3** | |
|---|---|
| Amyl alcohol | 26.19 |
| LUPEROX^{®} 7M50 ³ | 6.76 |

| **Charge 4** | |
|---|---|
| Amyl alcohol | 2.62 |

| **Charge 5** | |
|---|---|
| LUPEROX^{®} 7M50 ³ | 0.75 |
| Amyl alcohol | 10.47 |

| | |
|---|---|
| ³ t-butyl peroxyacetate, 50% solution in OMS, available from Arkema, Inc. | |

Charge 1 was transferred into a 4-neck round bottom flask with a condenser, nitrogen adaptor, mechanical stirrer, and addition funnel. The reaction was heated to 130°C under nitrogen blanket with agitation. Charge 2 and Charge 3 were added over two hours at 130°C. Charge 4 was used to rinse Charge 3. After addition of Charge 4, the reaction was held at 85°C for two hours. Charge 5 was added over 30 minutes at 130°C. The reaction mixture was heated for an additional one hour. The resulting material was a clear solution with a solids content of 49.89% as determined after heating the sample at 110°C for 0.5 hour. Further, the resulting material had a Mw of 16,094, a Mn of 4,425, and a PDI of 3.6, as determined by gel permeation chromatography versus a polystyrene standard as previously described.

### EXAMPLE 4

### Preparation of a lipophilic/hydrophilic linear block co-polymer

A lipophilic/hydrophilic block co-polymer according to the present invention was prepared from the components listed in Table 10.

**Table 10**

| **Components** | **Weight (grams)** |
|---|---|
| **Charge 1** | |
| DOWANOL^{™} PM ¹ | 258.98 |
| Ethyl 2-bromoisobutyrate | 10.9 |
| Copper(II) bromide | 0.23 |
| (ethylhexylacrylate)₆-TREN ⁴ | 1.28 |

| **Charge 2** | |
|---|---|
| Ethylhexyl methacrylate | 122.4 |
| Tin(II) ethylhexanoate | 0.51 |

| **Charge 3** | |
|---|---|
| 3-Methacryloxypropyltrimethoxysilane | 128.16 |
| Tin(II) ethylhexanoate | 0.51 |

| **Charge 4** | |
|---|---|
| DOWANOL^{™} PM ¹ | 387.9 |
| BISOMER^{®} MPEG 350 MA ⁵ | 76.88 |
| Methyl methacrylate | 66.02 |
| Tin(II) ethylhexanoate | 2.15 |

| **Charge 5** | |
|---|---|
| DOWANOL^{™} PM ¹ | 24.26 |
| VAZO^{®} 67 ² | 6.1 |

| | |
|---|---|
| ¹ Propylene glycol methyl ether, available from Dow Chemical Company. ² 2,2'azobis-(2-methylbutyronitrile), available from DuPont. ⁴ Synthesized by reacting six molar equivalences of ethylhexyl acrylate with one molar equivalence of tris(2-aminoethyl)amine (TREN). ⁵ Methoxy polyethyleneglycol methacrylate, commercially available from GEO Specialty Chemicals, Inc. | |

Charge 1 was transferred into a 4-neck round bottom flask with a condenser, nitrogen adaptor, mechanical stirrer, and addition funnel. Charge 1 had residual oxygen removed by bubbling with nitrogen for 15 minutes (nitrogen sparge). The reaction was heated to 80°C under nitrogen blanket with agitation. Charge 2 was sparged with nitrogen for 15 minutes, added over 30 minutes, and held at 80°C for 2.5 hours. Charge 3 was sparged with nitrogen for 15 minutes, added over 30 minutes, and heated at 80°C for two hours. Charge 4 was sparged with nitrogen for 15 minutes, added over 30 minutes, and heated at 80°C for three hours. Charge 5 was added over 30 minutes and held at 80°C for two hours. The resulting material was a light green solution with a solids content of 39.33% as determined after heating the sample at 110°C for one hour. Further, the resulting material had a Mw of 45896, a Mn of 10353, and a PDI of 4.4, as determined by gel permeation chromatography versus a polystyrene standard as previously described.

### COMPARATIVE EXAMPLE 5

### Preparation of a lipophilic polymer

A lipophilic polymer was prepared from the components listed in Table 11.

**Table 11**

| **Components** | **Weight (grams)** |
|---|---|
| **Charge 1** | |
| DOWANOL^{™} PM ¹ | 57.09 |

| **Charge 2** | |
|---|---|
| Stearyl methacrylate | 30.00 |
| 3-Methacryloxypropyltrimethoxysilane | 5.50 |

| **Charge 3** | |
|---|---|
| VAZO^{®} 67 ² | 1.15 |
| DOWANOL^{™} PM ¹ | 16.31 |

| **Charge 4** | |
|---|---|
| DOWANOL^{™} PM ¹ | 1.63 |

| **Charge 5** | |
|---|---|
| DOWANOL^{™} PM ¹ | 6.52 |
| VAZO^{®} 67 ² | 0.13 |

| | |
|---|---|
| ¹ Propylene glycol methyl ether, available from Dow Chemical Company. ² 2,2'azobis-(2-methylbutyronitrile), available from DuPont. | |

Charge 1 was transferred into a 4-neck round bottom flask with a condenser, nitrogen adaptor, mechanical stirrer, and addition funnel. The reaction was heated to 80°C under nitrogen blanket with agitation. Charge 2 and Charge 3 were added over two hours at 80°C. Charge 4 was used to rinse Charge 3. After addition of Charge 4, the reaction was held at 80°C for 1.5 hours. Charge 5 was added over 30 minutes at 80°C. The reaction mixture was heated for an additional one hour. The resulting material was a clear solution with a solids content of 19.35% as determined after heating the sample at 110°C for one hour. Further, the resulting material had a Mw of 19,569, a Mn of 3,275, and a PDI of 6.0 as determined by gel permeation chromatography versus a polystyrene standard as previously described.

### COMPARATIVE EXAMPLE 6

### Preparation of a hydrophilic polymer

A hydrophilic polymer was prepared from the components listed in Table 12.

**Table 12**

| **Components** | **Weight (grams)** |
|---|---|
| **Charge 1** | |
| DOWANOL^{™} PM ¹ | 47.99 |

| **Charge 2** | |
|---|---|
| 2-Hydroxyethyl methacrylate | 25.00 |
| 3-Methacryloxypropyltrimethoxysilane | 4.77 |

| **Charge 3** | |
|---|---|
| VAZO^{®} 67 ² | 0.83 |
| DOWANOL^{™} PM ¹ | 13.71 |

| **Charge 4** | |
|---|---|
| DOWANOL^{™} PM ¹ | 1.37 |

| **Charge 5** | |
|---|---|
| DOWANOL^{™} PM ¹ | 5.48 |
| VAZO^{®} 67 ² | 0.09 |

| | |
|---|---|
| ¹ Propylene glycol methyl ether, available from Dow Chemical Company. ² 2,2'azobis-(2-methylbutyronitrile), available from DuPont. | |

Charge 1 was transferred into a 4-neck round bottom flask with a condenser, nitrogen adaptor, mechanical stirrer, and addition funnel. The reaction was heated to 85°C under nitrogen blanket with agitation. Charge 2 and Charge 3 were added over two hours at 85°C. Charge 4 was used to rinse Charge 3. After addition of Charge 4, the reaction was held at 85°C for two hours. Charge 5 was added over 30 minutes at 85°C. The reaction mixture was heated for an additional one hour. The resulting material was a clear solution with a solids content of 37.09% as determined after heating the sample at 110°C for 0.5 hours. Further, the resulting material had a Mw of 11,053, a Mn of 3,724, and a PDI of 3.0 as determined by gel permeation chromatography versus a polystyrene standard as previously described.

### EXAMPLES 7-13

### Preparation of Coating Compositions

Seven (7) coating compositions were prepared from the following mixture of components listed in Table 13.

**TABLE 13**

| | **Parts by Weight Component** | | | | | | | | |
|---|---|---|---|---|---|---|---|---|---|
| **Components** | **Ex. 7** | **Ex. 8** | **Ex. 9** | **Ex. 10** | **Ex. 11** | | | **Comp. Ex. 12** | **Comp. Ex. 13** |
| Example 1 Resin | 1.4 | | | | | | | | |
| Example 2 Resin | | 0.1 | 1.0 | | | | | | |
| Example 3 Resin | | | | 1.0 | | | | | |
| Example 4 Resin | | | | | 1.3 | | | | |
| Comparative Example 5 Resin | | | | | | | | 2.6 | |
| Comparative Example 6 Resin | | | | | | | | | 1.4 |
| DOWANOL^{™} PM Acetate ⁶ | 98.6 | 99.0 | 99.0 | 99.0 | 98.7 | | | | |
| DOWANOL^{™} PM ¹ | | | | | | | | | 98.6 |
| Butyl Acetate | | | | | | | | 97.4 | |
| Hi-Gard 1080S ^{™ 7} | | 0.9 | | | | | | | |

| | | | | | | | | | |
|---|---|---|---|---|---|---|---|---|---|
| ¹ Propylene glycol methyl ether, available from Dow Chemical Company. ⁶ Propylene glycol methyl ether acetate, available from Dow Chemical Company. ⁷ Hi-Gard 1080S is a sol-gel coating solution commercially available from PPG Industries, Inc. | | | | | | | | | |

The coating compositions were prepared by mixing the components listed in Table 13. The coating compositions were then applied to a substrate and evaluated for various properties as described in Example 14.

### EXAMPLE 14

### Application and Evaluation of Anti-Fingerprint Coatings

The coating compositions prepared in Examples 7 to 13 were deposited on GORILLA^{®} glass (commercially available from Corning, Inc.) via spin-coating at 2000 rpm for 30 seconds using a Brewer Science CEE 200X spin coater. The compositions were cured in a box oven at 200°C for 30 minutes. The anti-fingerprint and durability properties of the coatings were then evaluated. The results of the testing are shown in Table 14.

**Table 14**

| **Test** | **Ex. 7** | **Ex. 8** | **Ex. 9** | **Ex. 10** | **Ex. 11** | | | **Comp Ex. 12** | **Comp Ex. 13** |
|---|---|---|---|---|---|---|---|---|---|
| Anti-fingerprint Test⁸ | 3 | 2 | 2 | 2 | 3 | | | 3 | 3 |
| Easy-to-clean Test⁹ | 7 | 2 | 3 | 4 | 5 | | | 12 | 10 |
| Initial Water Contact Angle¹⁰ | 88.8 | 76.5 | 81.7 | 79.1 | 81.8 | | | 79.7 | 64.9 |
| Water Contact Angle After 2000 Cycles Steel Wool Abrasion ¹¹ | 28.0 | 59.2 | 40.3 | 35.8 | 44.0 | | | 42.6 | 51.0 |
| Methylene Iodide Contact Angle ¹⁰ | 55 | 36.1 | 43.6 | 47.2 | 42.2 | | | 49.5 | 41.3 |
| Percent (%) Transmittance¹² | 92 | 92 | 92 | 92 | 92 | | | 92 | 92 |

| | | | | | | | | | |
|---|---|---|---|---|---|---|---|---|---|
| ⁸A single fingerprint is applied to the coated glass followed by visual inspection. The fingerprint visibility is rated based on the visual inspection where 0 = no visible fingerprint and 5 = visible fingerprint that would appear on uncoated glass. ⁹A single fingerprint is applied to the coated glass and the number of swipes required to completely remove the fingerprint residue from the surface with a dry optical cleaning cloth is recorded. ¹⁰ Contact angle measurements performed with a Kruss DSA100 Hardness Tester using 2 µL drops. ¹¹ 2000 cycles of steel wool abrasion was performed using a Taber Industries 5750 Linear Abraser with 1 kg of weight, 0000 steel wool, and 1 cm² head at 60 cycles/minute. Contact angle measurements performed with a Kruss DSA100 Hardness Tester using 2 µL drops. ¹² Transmittance measurements were performed on a Perkin Elmer Lambda 950 UV/Vis/NIR Spectrophotometer with a wavelength range of 400-800nm. | | | | | | | | | |

As shown in Table 14, coatings deposited from the compositions of Examples 7-11 according to the present invention exhibited better anti-fingerprint performance, based on the combination of results from the anti-fingerprint test and the easy-to-clean test, as compared to Comparative Examples 12 and 13. Further, Examples 7-11 also exhibited good optical clarity with high light transmittance as well as good durability based on the water contact angles and methylene iodide contact angles.

### EXAMPLE 15

### Preparation of a Coating Composition

A coating composition comprising a lipophilic/hydrophilic polymer of the present invention and an alkyl substituted alkoxysilane was prepared from the following mixture of components listed in Table 15.

**Table 15**

| **Components** | **Weight by Parts** |
|---|---|
| Example 2 resin | 0.25 |
| DYNASYLAN^{®} OCTEO ¹³ | 0.375 |
| DOWANOL^{™} PM ¹ | 19.80 |
| n-propanol | 79.17 |
| Nitric acid aqueous solution ¹⁴ | 0.405 |

| | |
|---|---|
| ¹³ Octyltriethoxysilane, commercially available from Evonik. ¹⁴ Nitric acid solution containing 0.5wt % nitric acid in an aqueous solution. | |

The resin from Example 2 and DYNASYLAN^{®} OCTEO were transferred into a plastic container, followed by the addition of DOWANOL^{™} PM and n-propanol (ACS reagent, available from Sigma Aldrich). The mixture was mixed for 30 minutes and nitric acid aqueous solution (0.5 wt%) was then added into the container. The final mixture was then mixed for an additional 15 minutes.

### EXAMPLE 16

### Preparation of a Coating Composition

A coating composition comprising a lipophilic/hydrophilic polymer of the present invention and an alkyl substituted alkoxysilane was prepared from the following mixture of components listed in Table 16.

**Table 16**

| **Components** | **Weight by Parts** |
|---|---|
| Example 2 resin | 1.5 |
| Tetraethoxysilane | 4.9 |
| DOWANOL^{™} PM ¹ | 24.6 |
| Isopropyl alcohol | 10.5 |
| DI water | 7.4 |
| Nitric acid aqueous solution ¹⁵ | 0.5 |
| Methyl ether propylene glycol acetate | 50.5 |

| | |
|---|---|
| ¹⁵ Nitric acid solution containing 4.68wt % nitric acid in an aqueous solution. | |

Tetraethoxysilane, isopropyl alcohol, and DI water were first transferred into a plastic container and mixed for 3 minutes. Nitric acid aqueous solution was then added to the container and the mixture was mixed for 1 hour. DOWANOL^{™} PM, methyl ether propylene glycol acetate, and the resin from example 2 were added into the mixture followed by an additional 15 minutes of mixing.

### EXAMPLE 17

### Application and Evaluation of Anti-Fingerprint Coatings

The coating compositions prepared in Examples 15 and 16 were deposited on GORILLA^{®} glass (commercially available from Corning, Inc.) using an IWATA W101 spray gun. The compositions were cured in a box oven at 150°C for 30 minutes. The anti-fingerprint and durability properties of the coatings were then evaluated. The results of the testing are shown in Table 17.

**Table 17**

| **Test** | **Ex. 15** | **Ex. 16** |
|---|---|---|
| Anti-fingerprint Test⁸ | 3 | 2 |
| Easy-to-clean Test⁹ | 2 | 2 |
| Initial Water Contact Angle¹⁰ | 76.7 | 78.9 |
| Water Contact Angle After 1500 eraser Abrasion¹⁶ | 63.2 | 61.5 |
| Percent (%) Transmittance¹² | 92 | 92 |

| | | |
|---|---|---|
| ¹⁶ 1500 cycles of eraser abrasion were performed using a Taber Industries 5750 Linear Abraser with 500 g of weight, and Minoan Rubber eraser. Contact angle measurements performed with a Kruss DSA100 Hardness Tester using 2 µL drops. | | |

As shown in Table 17, coatings deposited from the compositions of Examples 15 and 16 of the present invention exhibited good anti-fingerprint performance based on the combination of results from the anti-fingerprint test and the easy-to-clean test, good optical clarity with high light transmittance, and good durability based on the water contact angles.

## Claims

1. A lipophilic/hydrophilic polymer prepared from a mixture of reactants in a non-aqueous liquid medium comprising less than 50 weight % water, based on the total weight of the liquid medium, the reactants comprising:
a) a polymerizable ethylenically unsaturated alkoxysilane;
b) a polymerizable ethylenically unsaturated hydrophilic monomer that is different from (a) and comprises:
(i-1) a polymerizable ethylenically unsaturated group selected from a (meth)acrylol group, a vinyl group or combinations thereof and
(i-2a) a polar group, such as -CN or -NH₂, but no hydrocarbon group, or
(i-2b) one or more C₁-C₂ alkyl groups having a total number of carbon atoms of no more than two, wherein the C₁-C₂ alkyl group is unsubstituted or can optionally be substituted with a hydrophilic functional group, provided that no hydrocarbon group with more than two carbon atoms is present, or
(i-2c) one or more linear, branched or cyclic hydrocarbyl groups having a total number of at least three carbon atoms and being substituted with one or more hydrophilic functional groups comprising a hydroxyl and/or an amino group, provided that the equivalent ratio of carbon atoms in the hydrocarbon group(s) to hydrophilic functional groups is equal to or less than 4:1, or
(ii) a polymerizable ethylenically unsaturated group, two or more ether linkages, a C₂-C₃ hydrocarbon chain positioned between the oxygen atoms of each ether linkage, and optionally hydrophilic functional groups, or
(iii) a (meth)acrylate monomer comprising one ether linkage such as 2-methoxyethyl acrylate, 2-ethoxyethyl acrylate, and combinations thereof; and
c) a polymerizable ethylenically unsaturated lipophilic monomer that is different from (a) and comprises
(i) a polymerizable ethylenically unsaturated group selected from a (meth)acrylol group, a vinyl group or combinations thereof and
(ii) one or more linear, branched or cyclic hydrocarbyl groups having a total number of at least three carbon atoms wherein the hydrocarbyl group is unsubstituted or can optionally be substituted with a hydrophilic functional group provided that the equivalent ratio of carbon atoms in the hydrocarbyl groups to hydrophilic functional groups is greater than 4:1,
wherein the lipophilic/hydrophilic polymer comprises at least a pendant and/or terminal alkoxysilane group and wherein the mixture of reactants comprises:
from 15 to 50 weight % of the polymerizable ethylenically unsaturated alkoxysilane (a), from 20 to 75 weight of the polymerizable ethylenically unsaturated hydrophilic monomer (b), and from 10 to 60 weight % of the polymerizable ethylenically unsaturated lipophilic monomer (c), based on the total weight of the reactants,
with the proviso that the lipophilic/hydrophilic polymer is not a polymer having a M_{w} of 40,000 (the polystyrene equivalent value determined by gel permeation chromatography) and being prepared from a mixture of 45 mol % of styrene, 45 mol % of methyl methacrylate, and 10 mol % of propyltrimethoxysilane methacrylate.

2. The lipophilic/hydrophilic polymer of claim 1, wherein the polymerizable ethylenically unsaturated lipophilic monomer (c) comprises a lipophilic (meth)acrylate monomer, a lipophilic (meth)acrylamide monomer, styrene, a C₃-C₃₀ vinyl ester, a C₃-C₃₀ vinyl ether, or a combination thereof.

3. The lipophilic/hydrophilic polymer of claims 1 or 2, wherein the polymerizable ethylenically unsaturated hydrophilic monomer (b) comprises a hydrophilic (meth)acrylate monomer, (meth)acrylic acid salts, acrylamide, methacrylamide, N,N-dimethylacrylamide, N,N-dimethyl methacrylamide, vinyl acetate, vinyl propionate, methyl vinyl ether, ethyl vinyl ether, acrylonitrile, or a combination thereof.

4. The lipophilic/hydrophilic polymer of any of claims 1 to 3, wherein the polymerizable ethylenically unsaturated alkoxysilane (a) is represented by Chemical Formula I: 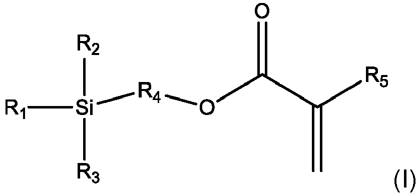 wherein R₁, R₂, and R₃ are each an alkoxy group; R₄ is an alkylene; and R₅ is a methyl group or a hydrogen.

5. The lipophilic/hydrophilic polymer of claims 3 or 4, wherein the polymerizable ethylenically unsaturated hydrophilic monomer (b) is represented by Chemical Formula II: 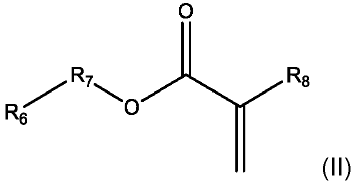
wherein R₆ is a hydroxyl group, an amino group, a methyl group, or
hydrogen; R₇ is a C₁-C₄ alkylene when R₆ is a hydroxyl group or an amino group, or R₇ is a C₁ alkylene when R₆ is a methyl group or hydrogen; and R₈ is a methyl group or a hydrogen.

6. The lipophilic/hydrophilic polymer of any of claims 2 to 5, wherein the polymerizable ethylenically unsaturated lipophilic monomer (c) is represented by Chemical Formula IV: 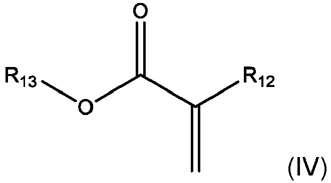 wherein R₁₃ is a C₃-C₃₀ alkyl group and R₁₂ is a methyl group or a hydrogen.

7. The lipophilic/hydrophilic polymer of any of claims 1 to 6, wherein the mixture of reactants used to prepare the non-aqueous based lipophilic/hydrophilic polymer further comprises a polymerizable ethylenically unsaturated ionic monomer that is different from (a), (b), and (c) having at least one cationic or anionic group and a corresponding counterion such as polymerizable ethylenically unsaturated ionic monomer represented by Chemical Formula VII: 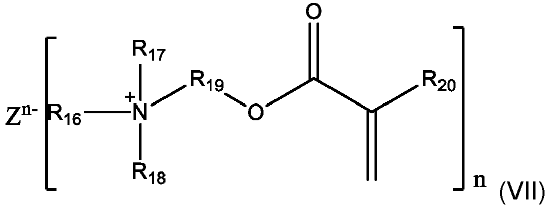 wherein Z is a bromide, chloride, or sulfate; n is a value of 1 or 2; R₁₆ is an alkyl group or a hydrogen; R₁₇ is an alkyl group or a hydrogen; R₁₈ is a C₁₀-C₂₂ alkyl group; R₁₉ is a C₁-C₁₀ alkylene; and R₂₀ is a methyl group or a hydrogen.

8. The lipophilic/hydrophilic polymer of any of claims 1 to 7, wherein the lipophilic/hydrophilic polymer is a lipophilic/hydrophilic linear random or block co-polymer or a lipophilic/hydrophilic comb, brush, or hyperbranched co-polymer.

9. The lipophilic/hydrophilic polymer of claim 8, further comprising a pendant macromonomer chain preferably comprising a lipophilic macromonomer chain, a hydrophilic macromonomer chain, or a combination thereof.

10. The lipophilic/hydrophilic polymer of any of claims 1 to 9, wherein the polymerizable ethylenically unsaturated alkoxysilane (a) comprises from 15 to 30 weight % of the mixture of reactants, based on the total weight of the reactants.

11. An anti-fingerprint coating composition comprising a lipophilic/hydrophilic polymer prepared from a mixture of reactants in a non-aqueous liquid medium comprising less than 50 weight % water, based on the total weight of the liquid medium, the reactants comprising:
a) a polymerizable ethylenically unsaturated alkoxysilane;
b) a polymerizable ethylenically unsaturated hydrophilic monomer that is different from (a); and comprises:
(i-1) a polymerizable ethylenically unsaturated group selected from a (meth)acrylol group, a vinyl group or combinations thereof and
(i-2a) a polar group, such as -CN or -NH₂, but no hydrocarbon group, or
(i-2b) one or more C₁-C₂ alkyl groups having a total number of carbon atoms of no more than two, wherein the C₁-C₂ alkyl group is unsubstituted or can optionally be substituted with a hydrophilic functional group, provided that no hydrocarbon group with more than two carbon atoms is present, or
(i-2c) one or more linear, branched or cyclic hydrocarbyl groups having a total number of at least three carbon atoms and being substituted with one or more hydrophilic functional groups comprising a hydroxyl and/or an amino group, provided that the equivalent ratio of carbon atoms in the hydrocarbon group(s) to hydrophilic functional groups is equal to or less than 4:1, or
(ii) a polymerizable ethylenically unsaturated group, two or more ether linkages, a C₂-C₃ hydrocarbon chain positioned between the oxygen atoms of each ether linkage, and optionally hydrophilic functional groups, or
(iii) a (meth)acrylate monomer comprising one ether linkage such as 2-methoxyethyl acrylate, 2-ethoxyethyl acrylate, and combinations thereof; and
c) a polymerizable ethylenically unsaturated lipophilic monomer that is different from (a) and comprises
(i) a polymerizable ethylenically unsaturated group selected from a (meth)acrylol group, a vinyl group or combinations thereof and
(ii) one or more linear, branched or cyclic hydrocarbyl groups having a total number of at least three carbon atoms wherein the hydrocarbyl group is unsubstituted or can optionally be substituted with a hydrophilic functional group provided that the equivalent ratio of carbon atoms in the hydrocarbyl groups to hydrophilic functional groups is greater than 4:1,
wherein the lipophilic/hydrophilic polymer comprises at least a pendant and/or terminal alkoxysilane group and wherein the mixture of reactants comprises:
from 15 to 50 weight % of the polymerizable ethylenically unsaturated alkoxysilane (a), from 20 to 75 weight of the polymerizable ethylenically unsaturated hydrophilic monomer (b), and from 10 to 60 weight % of the polymerizable ethylenically unsaturated lipophilic monomer (c), based on the total weight of the reactants.

12. The coating composition of claim 11, further comprising additional components that form a sol-gel preferably comprising an alkyl substituted alkoxysilane, a polyether functionalized alkoxysilane, a tetra-alkoxysilane, or a silanol functionalized silane formed by hydrolysis of the tetra-alkoxysilane, or a combination thereof.

13. The coating composition of claims 11 or 12, further comprising a protonic acid.

14. A substrate at least partially coated with the coating composition of any of claims 11 to 13, preferably comprising glass.

15. An electronic device or electronic component comprising a surface at least partially coated with the coating composition of any of claims 11 to 13.

## Patentansprüche

1. Lipophiles/hydrophiles Polymer, hergestellt aus einer Mischung aus Reaktanten in einem nichtwässrigem flüssigen Medium, das weniger als 50 Gew.-% Wasser, basierend auf dem Gesamtgewicht des flüssigen Mediums, enthält, wobei die Reaktanten umfassen:
a) ein polymerisierbares ethylenisch ungesättigtes Alkoxysilan,
b) ein polymerisierbares ethylenisch ungesättigtes hydrophiles Monomer, das sich von (a) unterscheidet und enthält:
(i-1) eine polymerisierbare ethylenisch ungesättigte Gruppe, ausgewählt aus einer (Meth)acrylolgruppe, einer Vinylgruppe oder Kombinationen daraus, und
(i-2a) eine polare Gruppe, wie etwa -CN oder -NH₂, aber keine Kohlenwasserstoffgruppe oder
(i-2b) eine oder mehrere C₁-C₂-Alkylgruppen mit einer Gesamtzahl von Kohlenstoffatomen von nicht mehr als zwei, wobei die C₁-C₂-Alkylgruppe unsubstituiert ist oder optional mit einer hydrophilen funktionellen Gruppe substituiert sein kann, unter der Voraussetzung, dass keine Kohlenwasserstoffgruppe mit mehr als zwei Kohlenstoffatomen vorhanden ist, oder
(i-2c) eine oder mehrere lineare, verzweigte oder cyclische Kohlenwasserstoffgruppen mit einer Gesamtzahl von mindestens drei Kohlenstoffatomen, die mit einer oder mehreren hydrophilen funktionellen Gruppen, umfassend eine Hydroxyl- und/oder Aminogruppe, substituiert sind, unter der Voraussetzung, dass das Äquivalentverhältnis von Kohlenstoffatomen in der (den) Kohlenwasserstoffgruppe(n) zu hydrophilen funktionellen Gruppen gleich oder kleiner als 4:1 ist, oder
(ii) eine polymerisierbare ethylenisch ungesättigte Gruppe, zwei oder mehr Etherverknüpfungen, eine C₂-C₃-Kohlenwasserstoffkette, die zwischen den Sauerstoffatomen jeder Etherverknüpfung angeordnet ist, und optional hydrophile funktionelle Gruppen oder
(iii) ein (Meth)acrylatmonomer, das eine Etherverknüpfung enthält, wie etwa 2-Methoxyethylacrylat, 2-Ethoxyethylacrylat, und Kombinationen davon, und
c) ein polymerisierbares ethylenisch ungesättigtes lipophiles Monomer, das sich von (a) unterscheidet und enthält:
(i) eine polymerisierbare ethylenisch ungesättigte Gruppe, ausgewählt aus einer (Meth)acrylolgruppe, einer Vinylgruppe oder Kombinationen daraus, und
(ii) eine oder mehrere lineare, verzweigte oder cyclische Kohlenwasserstoffgruppen mit einer Gesamtzahl von mindestens drei Kohlenstoffatomen, wobei die Kohlenwasserstoffgruppe unsubstituiert ist oder optional mit einer hydrophilen funktionellen Gruppe substituiert sein kann, unter der Voraussetzung, dass das Äquivalentverhältnis von Kohlenstoffatomen in den Kohlenwasserstoffgruppen zu hydrophilen funktionellen Gruppen größer als 4:1 ist,
wobei das lipophile/hydrophile Polymer mindestens eine seitenständige und/oder endständige Alkoxysilangruppe aufweist und wobei die Mischung der Reaktanten enthält:
15 bis 50 Gew.-% des polymerisierbaren ethylenisch ungesättigten Alkoxysilans (a), 20 bis 75 Gew.-% des polymerisierbaren ethylenisch ungesättigten hydrophilen Monomers (b) und 10 bis 60 Gew.-% des polymerisierbaren ethylenisch ungesättigten lipophilen Monomers (c), basierend auf dem Gesamtgewicht der Reaktanten,
unter der Voraussetzung, dass das lipophile/hydrophile Polymer kein Polymer ist, das ein M_{w} von 40.000 (Polystyroläquivalentwert, bestimmt mit Gelpermeationschromatographie) aufweist und aus einer Mischung aus 45 Mol-% Styrol, 45 Mol-% Methylmethacrylat und 10 Mol-% Propyltrimethoxysilanmethacrylat hergestellt ist.

2. Lipophiles/hyrophiles Polymer nach Anspruch 1, wobei das polymerisierbare ethylenisch ungesättigte lipophile Monomer (c) ein lipophiles (Meth)-acrylatmonomer, ein lipophiles (Meth)acrylamidmonomer, Styrol, einen C₃-C₃₀-Vinylester, einen C₃-C₃₀-Vinylether oder eine Kombination davon umfasst.

3. Lipophiles/hydrophiles Polymer nach Anspruch 1 oder 2, wobei das polymerisierbare ethylenisch ungesättigte hydrophile Monomer (b) ein hydrophiles (Meth)acrylatmonomer, (Meth)acrylsäuresalze, Acrylamid, Methacrylamid, N,N-Dimethylacrylamid, N,N-Dimethylmethacrylamid, Vinylacetat, Vinylpropionat, Methylvinylether, Ethylvinylether, Acrylnitril oder eine Kombination davon umfasst.

4. Lipophiles/hydrophiles Polymer nach einem der Ansprüche 1 bis 3, wobei das polymerisierbare ethylenisch ungesättigte Alkoxysilan (a) durch die chemische Formel I: 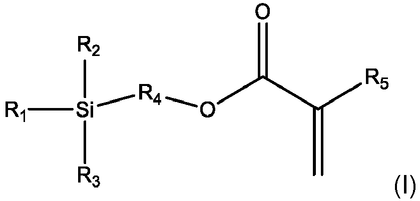
dargestellt wird,
wobei R₁, R₂ und R₃ jeweils eine Alkoxygruppe sind, R₄ ein Alkylen ist und R₅ eine Methylgruppe oder Wasserstoff ist.

5. Lipophiles/hydrophiles Polymer nach Anspruch 3 oder 4, wobei das polymerisierbare ethylenisch ungesättigte hydrophile Monomer (b) durch die chemische Formel II: 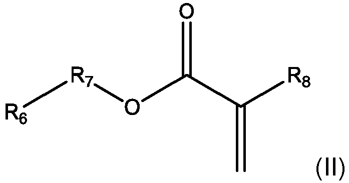
dargestellt wird,
worin R₆ eine Hydroxylgruppe, eine Aminogruppe, eine Methylgruppe oder Wasserstoff ist; R₇ ein C₁-C₄-Alkylen ist, wenn R₆ eine Hydroxylgruppe oder eine Aminogruppe ist, oder R₇ gleich C₁-Alkylen ist, wenn R₆ eine Methylgruppe oder Wasserstoff ist; und R₈ eine Methylgruppe oder Wasserstoff ist.

6. Lipophiles/hydrophiles Polymer nach einem der Ansprüche 2 bis 5, wobei das polymerisierbare ethylenisch ungesättigte lipophile Monomer (c) durch die chemische Formel IV: 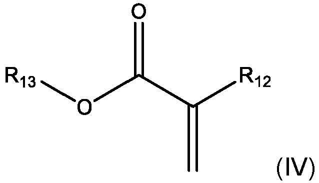
dargestellt wird,
worin R₁₃ eine C₃-C₃₀-Alkylgruppe ist und R₁₂ eine Methylgruppe oder Wasserstoff ist.

7. Lipophiles/hydrophiles Polymer nach einem der Ansprüche 1 bis 6, wobei die Mischung der Reaktanten, die verwendet wird, um das lipophile/hydrophile Polymer auf nichtwässriger Basis herzustellen, ferner ein polymerisierbares ethylenisch ungesättigtes ionisches Monomer enthält, das sich von (a), (b) und (c) unterscheidet und mindestens eine kationische oder anionische Gruppe und ein entsprechendes Gegenion aufweist, wie etwa ein polymerisierbares ethylenisch ungesättigtes ionisches Monomer, das durch die chemische Formel VII: 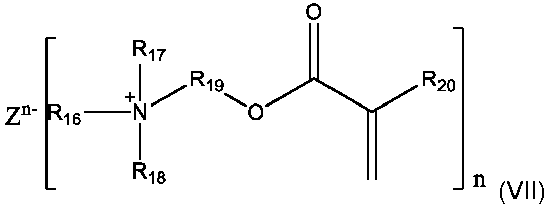
dargestellt wird,
worin Z ein Bromid, Chlorid oder Sulfat ist, n ein Wert von 1 oder 2 ist, R₁₆ eine Alkylgruppe oder Wasserstoff ist, R₁₇ eine Alkylgruppe oder Wasserstoff ist, R₁₈ eine C₁₀-C₂₂-Alkylgruppe ist, R₁₉ ein C₁-C₁₀-Alkylen ist und R₂₀ eine Methylgruppe oder Wasserstoff ist.

8. Lipophiles/hydrophiles Polymer nach einem der Ansprüche 1 bis 7, wobei das lipophile/hydrophile Polymer ein lipophiles/hydrophiles lineares statistisches oder Blockcopolymer oder ein liphophiles/hydrophiles Kamm-, Bürsten- oder hyperverzweigtes Copolymer ist.

9. Lipophiles/hydrophiles Polymer nach Anspruch 8, das ferner eine seitenständige Makromonomerkette aufweist, die vorzugsweise eine lipophile Makromonomerkette, eine hydrophile Makromonomerkette oder eine Kombination davon umfasst.

10. Lipophiles/hydrophiles Polymer nach einem der Ansprüche 1 bis 9, wobei das polymerisierbare ethylenisch ungesättigte Alkoxysilan (a) 15 bis 30 Gew.-% der Mischung der Reaktanten ausmacht, basierend auf dem Gesamtgewicht der Reaktanten.

11. Antifingerprint-Beschichtungszusammensetzung, die ein lipophiles/hydrophiles Polymer enthält, hergestellt aus einer Mischung aus Reaktanten in einem nichtwässrigem flüssigen Medium, das weniger als 50 Gew.-% Wasser, basierend auf dem Gesamtgewicht des flüssigen Mediums, enthält, wobei die Reaktanten umfassen:
a) ein polymerisierbares ethylenisch ungesättigtes Alkoxysilan,
b) ein polymerisierbares ethylenisch ungesättigtes hydrophiles Monomer, das sich von (a) unterscheidet und enthält:
(i-1) eine polymerisierbare ethylenisch ungesättigte Gruppe, ausgewählt aus einer (Meth)acrylolgruppe, einer Vinylgruppe oder Kombinationen daraus, und
(i-2a) eine polare Gruppe, wie etwa -CN oder -NH₂, aber keine Kohlenwasserstoffgruppe oder
(i-2b) eine oder mehrere C₁-C₂-Alkylgruppen mit einer Gesamtzahl von Kohlenstoffatomen von nicht mehr als zwei, wobei die C₁-C₂-Alkylgruppe unsubstituiert ist oder optional mit einer hydrophilen funktionellen Gruppe substituiert sein kann, unter der Voraussetzung, dass keine Kohlenwasserstoffgruppe mit mehr als zwei Kohlenstoffatomen vorhanden ist, oder
(i-2c) eine oder mehrere lineare, verzweigte oder cyclische Kohlenwasserstoffgruppen mit einer Gesamtzahl von mindestens drei Kohlenstoffatomen, die mit einer oder mehreren hydrophilen funktionellen Gruppen, umfassend eine Hydroxyl- und/oder Aminogruppe, substituiert sind, unter der Voraussetzung, dass das Äquivalentverhältnis von Kohlenstoffatomen in der (den) Kohlenwasserstoffgruppe(n) zu hydrophilen funktionellen Gruppen gleich oder kleiner als 4:1 ist, oder
(ii) eine polymerisierbare ethylenisch ungesättigte Gruppe, zwei oder mehr Etherverknüpfungen, eine C₂-C₃-Kohlenwasserstoffkette, die zwischen den Sauerstoffatomen jeder Etherverknüpfung angeordnet ist, und optional hydrophile funktionelle Gruppen oder
(iii) ein (Meth)acrylatmonomer, das eine Etherverknüpfung enthält, wie etwa 2-Methoxyethylacrylat, 2-Ethoxyethylacrylat, und Kombinationen davon, und
c) ein polymerisierbares ethylenisch ungesättigtes lipophiles Monomer, das sich von (a) unterscheidet und enthält:
(i) eine polymerisierbare ethylenisch ungesättigte Gruppe, ausgewählt aus einer (Meth)acrylolgruppe, einer Vinylgruppe oder Kombinationen daraus, und
(ii) eine oder mehrere lineare, verzweigte oder cyclische Kohlenwasserstoffgruppen mit einer Gesamtzahl von mindestens drei Kohlenstoffatomen, wobei die Kohlenwasserstoffgruppe unsubstituiert ist oder optional mit einer hydrophilen funktionellen Gruppe substituiert sein kann, unter der Voraussetzung, dass das Äquivalentverhältnis von Kohlenstoffatomen in den Kohlenwasserstoffgruppen zu hydrophilen funktionellen Gruppen größer als 4:1 ist,
wobei das lipophile/hydrophile Polymer mindestens eine seitenständige und/oder endständige Alkoxysilangruppe aufweist und wobei die Mischung der Reaktanten enthält:
15 bis 50 Gew.-% des polymerisierbaren ethylenisch ungesättigten Alkoxysilans (a), 20 bis 75 Gew.-% des polymerisierbaren ethylenisch ungesättigten hydrophilen Monomers (b) und 10 bis 60 Gew.-% des polymerisierbaren ethylenisch ungesättigten lipophilen Monomers (c), basierend auf dem Gesamtgewicht der Reaktanten.

12. Beschichtungszusammensetzung nach Anspruch 11, die ferner weitere Komponenten, die ein Sol-Gel bilden, enthält, vorzugsweise umfassend ein alkylsubstituiertes Alkoxysilan, ein polyetherfunktionalisiertes Alkoxysilan, ein Tetraalkoxysilan oder ein silanolfunktionalisiertes Silan, das durch Hydrolyse des Tetraalkoxysilans gebildet wird, oder eine Kombination davon.

13. Beschichtungszusammensetzung nach Anspruch 11 oder 12, die ferner eine protonische Säure enthält.

14. Substrat, das mindestens teilweise mit der Beschichtungszusammensetzung nach einem der Ansprüche 1 bis 13 beschichtet ist, vorzugsweise umfassend Glas.

15. Elektronisches Gerät oder elektronische Vorrichtung, die eine Oberfläche aufweist, die mindestens teilweise mit der Beschichtungszusammensetzung nach einem der Ansprüche 11 bis 13 beschichtet ist.

## Revendications

1. Polymère lipophile/hydrophile, préparé à partir d'un mélange de réactifs dans un milieu liquide non-aqueux qui comprend moins de 50 % d'eau, en poids rapporté au poids total du milieu liquide, lesquels réactifs comprennent :
a) un alcoxy-silane polymérisable à insaturation éthylénique,
b) un monomère hydrophile polymérisable à insaturation éthylénique, qui est différent du composant (a) et comporte :
i-1) un groupe polymérisable à insaturation éthylénique, choisi parmi un groupe (méth)acryloyle, un groupe vinyle et les combinaisons de tels groupes,
i-2a) et un groupe polaire, tel que -CN ou -NH₂, mais non pas un groupe hydrocarboné,
i-2b) ou un ou plusieurs groupe(s) alkyle en C₁-C₂, ne comportant pas au total plus de deux atomes de carbone, lequel groupe alkyle en C₁-C₂ ne porte aucun substituant ou, en option, peut porter en tant que substituant un groupe fonctionnel hydrophile, sous réserve qu'il n'y ait pas de groupe hydrocarboné comportant plus de deux atomes de carbone,
i-2c) ou un ou plusieurs groupe(s) hydrocarbyle, linéaire(s), ramifié(s) ou cyclique(s), comportant au total au moins trois atomes de carbone et portant, en tant que substituant(s), un ou plusieurs groupe(s) fonctionnel(s) hydrophile(s) comprenant un groupe hydroxyle et/ou un groupe amino, sous réserve que le rapport d'équivalents des atomes de carbone du ou des groupe(s) hydrocarboné(s) aux groupes fonctionnels hydrophiles soit inférieur ou égal à 4/1,
ii) ou bien un groupe polymérisable à insaturation éthylénique, deux raccords de type éther ou plus, une chaîne hydrocarbonée en C₂-C₃ placée entre les atomes d'oxygène de tous les raccords de type éther, et en option, des groupes fonctionnels hydrophiles,
iii) ou bien un monomère (méth)acrylate comportant un unique raccord de type éther, tel que l'acrylate de 2-méthoxy-éthyle, l'acrylate de 2-éthoxy-éthyle, et leurs combinaisons,
c) et un monomère lipophile polymérisable à insaturation éthylénique, qui est différent du composant (a) et comporte :
i) un groupe polymérisable à insaturation éthylénique, choisi parmi un groupe (méth)acryloyle, un groupe vinyle et les combinaisons de tels groupes,
ii) et un ou plusieurs groupe(s) hydrocarbyle, linéaire(s), ramifié(s) ou cyclique(s), comportant au total au moins trois atomes de carbone, lequel groupe hydrocarbyle ne porte aucun substituant ou, en option, peut porter en tant que substituant un groupe fonctionnel hydrophile, sous réserve que le rapport d'équivalents des atomes de carbone des groupes hydrocarbyle aux groupes fonctionnels hydrophiles soit supérieur à 4/1,
lequel polymère lipophile/hydrophile comporte au moins un groupe alcoxy-silane latéral et/ou terminal, et étant entendu que le mélange de réactifs comprend :
de 15 à 50 % en poids de l'alcoxy-silane polymérisable à insaturation éthylénique (a), de 20 à 75 % en poids du monomère hydrophile polymérisable à insaturation éthylénique (b), et de 10 à 60 % en poids du monomère lipophile polymérisable à insaturation éthylénique (c), par rapport au poids total des réactifs,
sous réserve que le polymère lipophile/hydrophile ne soit pas un polymère présentant une masse molaire Mw de 40 000 (valeur déterminée par chromatographie par perméation de gel avec échantillon standard de polystyrène) et préparé à partir d'un mélange de 45 % en moles de styrène, 45 % en moles de méthacrylate de méthyle et 10 % en moles de méthacrylate de triméthoxysilyl-propyle.

2. Polymère lipophile/hydrophile conforme à la revendication 1, dans lequel le monomère lipophile polymérisable à insaturation éthylénique (c) comprend un monomère (méth)acrylate lipophile, un monomère (méth)acrylamide lipophile, le styrène, un ester de vinyle en C₃-C₃₀, un éther de vinyle en C₃-C₃₀, ou une combinaison de tels monomères.

3. Polymère lipophile/hydrophile conforme à la revendication 1 ou 2, dans lequel le monomère hydrophile polymérisable à insaturation éthylénique (b) comprend un monomère (méth)acrylate hydrophile, les sels d'acide (méth)acrylique, l'acrylamide, le méthacrylamide, le N,N-diméthyl-acrylamide, le N,N-diméthyl-méthacrylamide, l'acétate de vinyle, le propionate de vinyle, le méthyl-vinyl-éther, l'éthyl-vinyl-éther, l'acrylonitrile, ou une combinaison de ces monomères.

4. Polymère lipophile/hydrophile conforme à l'une des revendications 1 à 3, dans lequel l'alcoxy-silane polymérisable à insaturation éthylénique (a) est représenté par la Formule Chimique I : 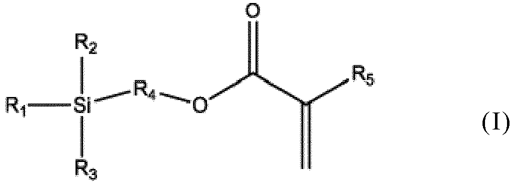 dans laquelle R₁, R₂ et R₃ représentent chacun un groupe alcoxy, R₄ représente un groupe alcanediyle, et R₅ représente un groupe méthyle ou un atome d'hydrogène.

5. Polymère lipophile/hydrophile conforme à la revendication 3 ou 4, dans lequel le monomère hydrophile polymérisable à insaturation éthylénique (b) est représenté par la Formule Chimique II : 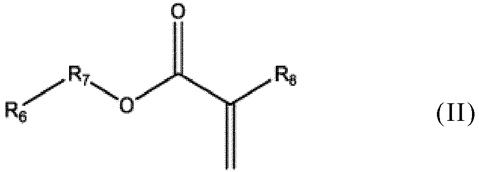 dans laquelle R₆ représente un groupe hydroxyle, un groupe amino, un groupe méthyle ou un atome d'hydrogène, R₇ représente un groupe alcanediyle en C₁-C₄ si R₆ représente un groupe hydroxyle ou amino, ou R₇ représente un groupe alcanediyle en C₁ si R₆ représente un groupe méthyle ou un atome d'hydrogène, et R₈ représente un groupe méthyle ou un atome d'hydrogène.

6. Polymère lipophile/hydrophile conforme à l'une des revendications 2 à 5, dans lequel le monomère lipophile polymérisable à insaturation éthylénique (c) est représenté par la Formule Chimique IV : 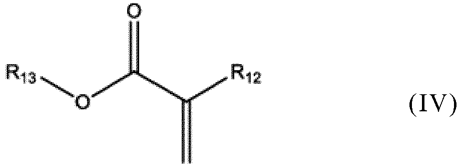 dans laquelle R₁₃ représente un groupe alkyle en C₃-C₃₀, et R₁₂ représente un groupe méthyle ou un atome d'hydrogène.

7. Polymère lipophile/hydrophile conforme à l'une des revendications 1 à 6, pour lequel le mélange de réactifs utilisé pour préparer le polymère lipophile/hydrophile à base non-aqueuse comprend en outre un monomère ionique polymérisable à insaturation éthylénique qui est différent des composants (a), (b) et (c) et comporte au moins un groupe cationique ou anionique et un contre-ion correspondant, comme un monomère ionique polymérisable à insaturation éthylénique représenté par la Formule Chimique VII : 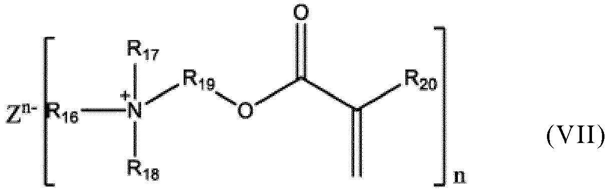 dans laquelle Z représente un ion bromure, chlorure ou sulfate, l'indice n vaut 1 ou 2, R₁₆ représente un groupe alkyle ou un atome d'hydrogène, R₁₇ représente un groupe alkyle ou un atome d'hydrogène, R₁₈ représente un groupe alkyle en C₁₀-C₂₂, R₁₉ représente un groupe alcanediyle en C₁-C₁₀, et R₂₀ représente un groupe méthyle ou un atome d'hydrogène.

8. Polymère lipophile/hydrophile conforme à l'une des revendications 1 à 7, lequel polymère lipophile/hydrophile est un copolymère lipophile/hydrophile linéaire, statistique ou à blocs, ou un copolymère lipophile/hydrophile en peigne, en brosse ou hyper-ramifié.

9. Polymère lipophile/hydrophile conforme à la revendication 8, qui comporte en outre une chaîne latérale macromonomère comprenant de préférence une chaîne macromonomère lipophile, une chaîne macromonomère hydrophile, ou une combinaison de telles chaînes.

10. Polymère lipophile/hydrophile conforme à l'une des revendications 1 à 9, pour lequel l'alcoxy-silane polymérisable à insaturation éthylénique (a) représente de 15 à 30 % du mélange de réactifs, en poids rapporté au poids total des réactifs.

11. Composition de revêtement anti-traces de doigts, comprenant un polymère lipophile/hydrophile, préparé à partir d'un mélange de réactifs dans un milieu liquide non-aqueux qui comprend moins de 50 % d'eau, en poids rapporté au poids total du milieu liquide, lesquels réactifs comprennent :
a) un alcoxy-silane polymérisable à insaturation éthylénique,
b) un monomère hydrophile polymérisable à insaturation éthylénique, qui est différent du composant (a) et comporte :
i-1) un groupe polymérisable à insaturation éthylénique, choisi parmi un groupe (méth)acryloyle, un groupe vinyle et les combinaisons de tels groupes,
i-2a) et un groupe polaire, tel que -CN ou -NH₂, mais non pas un groupe hydrocarboné,
i-2b) ou un ou plusieurs groupe(s) alkyle en C₁-C₂, ne comportant pas au total plus de deux atomes de carbone, lequel groupe alkyle en C₁-C₂ ne porte aucun substituant ou, en option, peut porter en tant que substituant un groupe fonctionnel hydrophile, sous réserve qu'il n'y ait pas de groupe hydrocarboné comportant plus de deux atomes de carbone,
i-2c) ou un ou plusieurs groupe(s) hydrocarbyle, linéaire(s), ramifié(s) ou cyclique(s), comportant au total au moins trois atomes de carbone et portant, en tant que substituant(s), un ou plusieurs groupe(s) fonctionnel(s) hydrophile(s) comprenant un groupe hydroxyle et/ou un groupe amino, sous réserve que le rapport d'équivalents des atomes de carbone du ou des groupe(s) hydrocarboné(s) aux groupes fonctionnels hydrophiles soit inférieur ou égal à 4/1,
ii) ou bien un groupe polymérisable à insaturation éthylénique, deux raccords de type éther ou plus, une chaîne hydrocarbonée en C₂-C₃ placée entre les atomes d'oxygène de tous les raccords de type éther, et en option, des groupes fonctionnels hydrophiles,
iii) ou bien un monomère (méth)acrylate comportant un unique raccord de type éther, tel que l'acrylate de 2-méthoxy-éthyle, l'acrylate de 2-éthoxy-éthyle, et leurs combinaisons,
c) et un monomère lipophile polymérisable à insaturation éthylénique, qui est différent du composant (a) et comporte :
i) un groupe polymérisable à insaturation éthylénique, choisi parmi un groupe (méth)acryloyle, un groupe vinyle et les combinaisons de tels groupes,
ii) et un ou plusieurs groupe(s) hydrocarbyle, linéaire(s), ramifié(s) ou cyclique(s), comportant au total au moins trois atomes de carbone, lequel groupe hydrocarbyle ne porte aucun substituant ou, en option, peut porter en tant que substituant un groupe fonctionnel hydrophile, sous réserve que le rapport d'équivalents des atomes de carbone des groupes hydrocarbyle aux groupes fonctionnels hydrophiles soit supérieur à 4/1,
lequel polymère lipophile/hydrophile comporte au moins un groupe alcoxy-silane latéral et/ou terminal, et étant entendu que le mélange de réactifs comprend :
de 15 à 50 % en poids de l'alcoxy-silane polymérisable à insaturation éthylénique (a), de 20 à 75 % en poids du monomère hydrophile polymérisable à insaturation éthylénique (b), et de 10 à 60 % en poids du monomère lipophile polymérisable à insaturation éthylénique (c), par rapport au poids total des réactifs.

12. Composition de revêtement conforme à la revendication 11, qui comprend en outre des composants supplémentaires qui forment un sol-gel, comprenant de préférence un alcoxy-silane à substituant alkyle, un alcoxy-silane fonctionnalisé en polyéther, un tétraalcoxy-silane, ou un silane fonctionnalisé en silanol, formé par hydrolyse d'un tétraalcoxy-silane, ou une combinaison de tels composants.

13. Composition de revêtement conforme à la revendication 11 ou 12, qui comprend en outre un acide protonique.

14. Substrat revêtu, au moins partiellement, avec une composition de revêtement conforme à l'une des revendications 11 à 13, comprenant de préférence un verre.

15. Dispositif électronique ou composant électronique comportant une surface revêtue, au moins partiellement, avec une composition de revêtement conforme à l'une des revendications 11 à 13.
